# EUROPÄISCHE PATENTSCHRIFT

(11) **EP 1 392 545 B1**
(45) Veröffentlichungstag und Bekanntmachung des Hinweises auf die Patenterteilung: **25.05.2005**
(21) Anmeldenummer: 02729907.2
(22) Anmeldetag: 22.05.2002
(51) Int. Cl.: B60N 2/12, B60N 2/20

(54) **KRAFTFAHRZEUGSITZ**
MOTOR VEHICLE SEAT
SIEGE DE VEHICULE AUTOMOBILE

(30) Priorität: 23.05.2001 DE 10127067
(43) Veröffentlichungstag der Anmeldung: 03.03.2004
(73) Patentinhaber: Brose Fahrzeugteile GmbH & Co. KG, Coburg, 96450 Coburg (DE)
(72) Erfinder: SUCK, Wolfgang, 96450 Coburg (DE); RAUSCH, Peter, 98489 Niederfüllbach (DE); SCHWERDTNER, Christina, 96465 Neustadt (DE)
(74) Vertreter: Baumgärtel, Gunnar, Dr.
(86) Internationale Anmeldenummer: PCT/DE2002/001910
(87) Internationale Veröffentlichungsnummer: WO 2002/094606

(56) Entgegenhaltungen:
- EP-A- 0 683 066
- WO-A-00/55002
- DE-A- 3 036 559
- DE-A- 3 608 827
- DE-U- 29 910 720
- FR-A- 2 800 021

## Beschreibung

Die Erfindung betrifft einen Kraftfahrzeugsitz nach Patentanspruch 1.

Ein solcher Kraftfahrzeugsitz umfaßt ein Sitzgestell; eine schwenkbar gelagerte Rückenlehne des Sitzgestells, die einerseits (durch Verschwenken) in einem Gebrauchsbereich zwischen verschiedenen Gebrauchspositionen einstellbar ist und andererseits - nach Entriegelung der Rückenlehne, beispielsweise mittels eines hierfür an der Rückenlehne üblicherweise vorgesehenen Entriegelungshebels - (durch Vorschwenken) stufenlos in Richtung auf die Sitzfläche des Sitzgestells vorklappbar ist; eine Sitzlängsführung zur Einstellung der Sitzlängsposition des Sitzgestells; eine Feststellvorrichtung zur Verriegelung einer zuvor eingestellten Sitzlängsposition; einen Koppelmechanismus, über den die Rückenlehne mit der Feststellvorrichtung derart gekoppelt ist, dass die Feststellvorrichtung beim Vorklappen der Rückenlehne in Richtung auf die Sitzfläche durch die Ausgangsseite des Koppelmechanismus entriegelbar ist; sowie einen Taumelbeschlag der Rückenlehne der beim Verschwenken der Rückenlehne um eine Taumelachse taumelt und mit dem die Eingangsseite des Koppelmechanismus verbunden ist.

Ferner weist der Koppelmechanismus ein Zugmittel auf, das bei einem Verschwenken der Rückenlehne und der hiermit einhergehenden Taumelbewegung des Beschlages Kräfte zur Ausgangsseite des Koppelmechanismus überträgt, so dass der Koppelmechanismus auf die Feststellvorrichtung einwirken kann. Als Zugmittel eignet sich dabei insbesondere die Seele eines Bowdenzuges.

Die unterschiedlichen Gebrauchspositionen, die die Rückenlehne in dem Gebrauchsbereich einnehmen kann, dienen zum Abstützen des Rückens einer auf dem Sitz befindlichen Person. Weiterhin können auch Gebrauchspositionen zum Abstützen des Rückens einer in liegender Haltung auf dem Sitz befindlichen Person dienen.

Das Vorklappen der Rückenlehne auf die Sitzfläche dient demgegenüber zum Entriegeln der Feststellvorrichtung der Sitzlängsführung über den Koppelmechanismus, der eingangsseitig mit dem Taumelbeschlag und ausgangsseitig mit der Feststellvorrichtung verbunden ist. Das Vorklappen der Rückenlehne wird üblicherweise eingeleitet, durch Betätigung eines hierfür an der Rückenlehne vorgesehenen Hebels, der ein müheloses Vorklappen der Rückenlehne auf die Sitzfläche gestattet und zugleich die zuvor bestehende Gebrauchsposition des Fahrzeugsitzes entriegelt.

Nach dem Entriegeln der Feststellvorrichtung durch Vorklappen der Rückenlehne kann der Sitz ohne weiteres nach vorne verschoben werden, beispielsweise um bei zweitürigen Cabriolet-Fahrzeugen einer Person den Einstieg in den Fond des Kraftfahrzeugs zu erleichtern. Es handelt sich hierbei um eine sogenannte Easy-Entry-Funktion, die das Platznehmen auf den Rücksitzen eines zweitürigen Kraftfahrzeugs erleichtern sollen. Häufig ist diese Easy-Entry-Funktion noch mit einer Memory-Einrichtung gekoppelt, mit der beim anschließenden Zurückschieben des Fahrzeugsitzes die ursprüngliche Sitzposition automatisch wieder aufgefunden wird.

Bei einem bekannten Fahrzeugsitz der eingangs genannten Art umfaßt der Koppelmechanismus einen Bowdenzug, dessen Seele einerseits mit dem Taumelbeschlag und andererseits (ggf. über weitere Koppelelemente) mit der Feststellvorrichtung der Sitzlängsführung verbunden ist. Hierbei besteht das Problem, dass aufgrund der Taumelbewegung des Taumelbeschlages beim Verschwenken des Sitzes - je nach dem, in welcher Gebrauchsposition sich der Sitz gerade befindet - eine unterschiedliche Längung des Bowdenzugs vorliegt und damit unterschiedliche Betätigungswege zum Entriegeln der Feststellvorrichtung mittels des Bowdenzugs auftreten. Zur Lösung dieses Problems ist es bekannt, in die Seele des Bowdenzugs ein elastisches Element in Form einer Zugfeder zu integrieren, wobei die Federkonstante dieser Feder so groß ist, dass sie die Betätigung der Feststellvorrichtung mittels des Bowdenzugs nicht beeinträchtigt. Die Wirkung dieser Feder muss also die Wirkung der üblicherweise in die Feststellvorrichtung integrierten Federelemente übertreffen, welche die Funktion haben die Feststellvorrichtung in ihren verriegelten Zustand vorzuspannen. (Durch diese Vorspannung der Feststellvorrichtung in ihren verriegelten Zustand soll aus Sicherheitsgründen gewährleistet sein, dass die Sitzlängsführung immer dann automatisch verriegelt ist, wenn nicht ein Insasse aktiv eine Entriegelung der Feststellvorrichtung bewirkt.) Erst wenn die Feststellvorrichtung vollständig entriegelt ist und eine weitere Betätigung der Feststellvorrichtung mittels des Koppelmechanismus nicht mehr möglich ist, dehnt sich die Zugfeder und gestattet somit einen Ausgleich des Überhubs, der aufgrund der vorstehend erwähnten unterschiedlichen Betätigungswege zum Entriegeln der Feststellvorrichtung - je nach Stellung der Sitzlehne und damit des Taumelbeschlages beim Beginn des Vorklappens der Rückenlehne - auftreten kann.

Die Verwendung einer Ausgleichsfeder zu dem genannten Zweck ist beispielsweise aus der FR-A 2 800 021 bekannt.

Der bekannte Koppelmechanismus für die Easy-Entry-Funktion hat den Nachteil, dass die hierfür in den Bowdenzug zu integrierende Feder wegen der erforderlichen großen Federkonstante einigen Bauraum beansprucht und zudem auch das Gewicht der Anordnung wesentlich erhöht.

Aus der älteren, nachveröffentlichten Patentanmeldung EP-A-1 334 005 (WO-A-02/40313), die unter Artikel 54(3) EPÜ fällt und somit für die Frage der erfinderischen Tätigkeit nicht von Bedeutung ist, ist ein Kraftfahrzeugsitz mit einem Sitzgestell bekannt, dessen Rückenlehne einerseits durch Verschwenken in einem Gebrauchsbereich zwischen verschiedenen Gebrauchspositionen einstellbar ist und andererseits in einem entriegelten Zustand durch Verschwenken in Richtung auf die Sitzfläche des Sitzgestells vorklappbar ist. Der bekannte Kraftfahrzeugsitz weist ferner eine Sitzlängsführung zur Einstellung der Sitzlängsposition, eine Feststellvorrichtung zur Verriegelung einer zuvor eingestellten Sitzlängsposition sowie einen Koppelmechaismus auf, über den die Rückenlehne mit der Feststellvorrichtung derart gekoppelt ist, dass die Feststellvorrichtung beim Vorklappen der Rückenlehne entriegelt wird. Hierzu ist ein um eine Achse schwenkbar gelagerter Lehnenbeschlag der Rückenlehne mit der Eingangsseite des Koppelmechanismus gekoppelt. Der Koppelmechanismus umfasst ein einem schwenkbar gelagerten Koppelelement festgelegtes Zugmittel, das bei einem Verschwenken der Rückenlehne Kräfte zur Ausgangsseite des Koppelmechanismus überträgt, um auf die Feststellvorrichtung einzuwirken. Hierbei wirken ein Anschlag des Lehnenbeschlages sowie ein Gegenanschlag des Koppelelementes derart zusammen, dass eine Entriegelung der Feststellvorrichtung erst erfolgt, wenn die Rückenlehne über den Gebrauchsbereich hinaus nach vorne verschwenkt worden ist.

Der Erfindung liegt das Problem zugrunde, einen Kraftfahrzeugsitz der eingangs genannten Art zu schaffen, die mit einfachen Mitteln eine Kopplung der Rückenlehne über den Taumelbeschlag und einen Koppelmechanismus an die Feststellvorrichtung der Sitzlängsführungen ermöglicht.

Diese Aufgabe wird erfindungsgemäß durch die Schaffung eines Kraftfahrzeugsitzes mit den Merkmalen des Patentanspruches 1 gelöst.

Danach sind Ausgleichsmittel vorgesehen, die bei einem Verschwenken der Rückenlehne (zum Zwecke der Einstellung einer Gebrauchsposition der Rückenlehne oder zum Zwecke des Vorklappens der Rückenlehne) zumindest über einen Teilbereich des Gebrauchsbereiches eine Entriegelung der Feststellvorrichtung verhindern.

Zur Bildung der Ausgleichsmittel ist das Zugmittel an einer um eine Achse, insbesondere die Taumelachse, schwenkbar gelagerten Halterung festgelegt, wobei diese Halterung von dem Taumelbeschlag des Sitzes dann nicht mitgenommen wird, wenn sich die Rückenlehne beim Vorklappen zum Zwecke des Auslösens der Easy-Entry-Funktion in ihrem Gebrauchsbereich bzw. zumindest einem Teilbereich davon befindet. Demnach erfolgt beim Verschwenken der Rückenlehne in dem Gebrauchsbereich oder zumindest einem Teilbereich davon keine Einwirkung auf das Zugmittel über den Taumelbeschlag. Diese setzt vielmehr erst ein, nachdem die Rückenlehne über ihren Gebrauchsbereich hinaus in Richtung auf die Sitzfläche verschwenkt (vorgeklappt) worden ist.

Konkret sind bei Verwendung eines Bowdenzugs als Bestandteil des Koppelmechanismus zur taumelbeschlagseitigen Fixierung der Hülle der Bowdenzugs einerseits und der Seele andererseits zwei zueinander verdrehbare, um eine Achse (insbesondere die Taumelachse) verschwenkbare Halterungen vorgesehen, die bei einem Vorklappen der Rückenlehne nur dann gegeneinander verdreht werden, wenn sich die Rückenlehne außerhalb des Gebrauchsbereiches bzw. zumindest eines vorbestimmten Teilbereichs hiervon befindet. Nur dann findet also durch das Gegeneinanderverdrehen der Seele des Bowdenzugs einerseits und der Hülle andererseits eine Straffung der Seele statt, die zu einer Einwirkung auf die Feststellvorrichtung führt.

Bei der erfindungsgemäßen Lösung wird also - im Gegensatz zum Stand der Technik - nicht einfach der Überhub kompensiert, der nach dem Entriegeln der Feststellvorrichtung auftreten kann, sondern es findet vielmehr bereits vor dem Entriegeln der Feststellvorrichtung ein Ausgleich von Toleranzen statt, die auf die Taumelbewegung des Taumelbeschlages zurückzuführen sind. Hierzu sind Ausgleichsmittel vorgesehen, die verhindern, dass die Entriegelung bereits stattfindet, während sich die Rückenlehne beim Vorklappen noch in ihrem Gebrauchsbereich oder zumindest in einem bestimmten, vorgebbaren Teilbereichs dieses Gebrauchsbereiches befindet.

Der Teilbereich des Gebrauchsbereiches kann einerseits kleiner als letzterer sein; diese beiden Bereiche können jedoch auch zusammenfallen, so dass ein Entriegeln der Feststellvorrichtung unmöglich ist, solange sich die Rückenlehne beim Vorklappen noch in ihrem Gebrauchsbereich befindet.

Die Ausgleichsmittel können insbesondere zu einer Kompensation der Einwirkung der Rückenlehne auf den Koppelmechanismus beim Verschwenken der Rückenlehne in dem genannten Teilbereich des Gebrauchsbereiches ausgebildet sein. Mit anderen Worten ausgedrückt, kompensieren die Ausgleichsmittel die Einwirkung der Rückenlehne (über den Taumelbeschlag) auf den Koppelmechanismus derart, dass keine solche Einwirkung des Koppelmechanismus auf die Feststellvorrichtung erfolgen kann, die zu einer Entriegelung der Feststellvorrichtung führen würde. Insbesondere kann vorgesehen sein, dass die Ausgleichsmittel ausgebildet und vorgesehen sind, bei einem Verschwenken der Rückenlehne zumindest in dem Teilbereich des Ausgleichsbereiches jegliche Einwirkung des Koppelmechanismus auf die Feststellvorrichtung überhaupt zu verhindern.

Hierzu sind die Ausgleichsmittel ausgebildet und vorgesehen, eine Einwirkung des Koppelmechanismus auf die Feststellvorrichtung erst dann zuzulassen, wenn sich die Rückenlehne beim Vorklappen zum Zwecke des Auslösens der Easy-Entry-Funktion der vollständig vorgeklappten Position (entsprechend dem Aufliegen der Rückenlehne auf der Sitzfläche) bis auf eine vorgegebene Winkeldifferenz genähert hat. In diesem Fall ist sichergestellt, dass unabhängig davon, in welcher Gebrauchsposition sich der Fahrzeugsitz beim Auslösen der Easy-Entry-Funktion befindet, die Einwirkung des Koppelmechanismus auf die Feststellvorrichtung stets bei dem gleichen Kippwinkel der Rückenlehne nach vorne beginnt.

Bevorzugt sind die Ausgleichsmittel im oder am Koppelmechanismus angeordnet. Hierbei kann beispielsweise vorgesehen sein, dass die Ausgleichsmittel beim Verschwenken der Rückenlehne zumindest in dem Teilbereich des Ausgleichsbereiches eine Einwirkung der Rückenlehne bzw. des Taumelbeschlages auf den Koppelmechanismus derart ausgleichen, dass der Koppelmechanismus ausgangsseitig nicht auf die Feststellvorrichtung einwirkt.

Hierbei kann ferner vorgesehen sein, dass beim Vorklappen der Rückenlehne außerhalb des Gebrauchsbereiches bzw. zumindest eines Teilbereichs hiervon die eine Halterung gemeinsam mit dem Taumelbeschlag bewegt wird und die andere Halterung an einer nicht gemeinsam mit der Rückenlehne verschwenkbaren Baugruppe des Sitzgestells blockiert wird.

In einer weiteren Variante umfaßt der Koppelmechanismus einen Koppelhebel, der bei einem Verschwenken der Rückenlehne in ihrem Gebrauchsbereich oder zumindest in einem Teilbereich davon nicht auf das zur Feststellvorrichtung hin nachgeordnete Element des Koppelmechanismus einwirkt, so dass die beim Verschwenken der Rückenlehne eingangsseitig in den Koppelmechanismus eingeleiteten Kräfte nicht zur Feststellvorrichtung hin übertragen werden und somit keine Verriegelung der Feststellvorrichtung stattfinden kann. Die Entriegelung der Feststellvorrichtung setzt somit erst ein, wenn die Rückenlehne über ihren Gebrauchsbereich bzw. zumindest einen definierten Teilbereich davon hinaus nach vorne vorgeklappt worden ist.

In einer Weiterbildung weist das dem Koppelhebel nachgeordnete Element des koppelmechanismus eine Ausbuchtung auf, in der ein Ende des Koppelhebels beim Verschwenken der Rückenlehne bewegbar ist, ohne auf das nachgeordnete Element einzuwirken. Das Ende des Koppelhebels fährt in die Ausbuchtung ein, wenn die Entriegelung der Feststellvorrichtung abgeschlossen ist und dient somit der Überhubkompensation.

Gemäß Anspruch 9 können zur Überhubkompensation allgemein Ausgleichsmittel vorgesehen sein, die bei einem Vorklappen der Rückenlehne über die Position hinaus, in der die Entriegelung der Feststellvorrichtung abgeschlossen ist, einem Zusammenwirken zweier Elemente des Koppelmechanismus derart entgegenwirken, dass eine zusätzliche Einwirkung des Koppelmechanismus auf die Feststellvorrichtung vermieden wird. Es soll hiermit verhindert werden, dass es bei einem Vorklappen der Rückenlehne über den Punkt hinaus, in dem die Festellvorrichtung vollständig entriegelt ist, zu einer weiteren, zusätzlichen Einwirkung auf das (zur Entriegelung der Feststellvorrichtung auszulenkende) Betätigungselement der Feststellvorrichtung kommt. D.h., es wird verhindert, dass das Betätigungselement nach vollständigem Entriegeln der Feststellvorrichtung noch weiter (zusätzlich) ausgelenkt wird. Hierdurch soll eine Beschädigung der Feststellvorrichtung, beispielsweise von deren Rückstellfedern, durch eine Überbeanspruchung als Folge des Vorklappens der Rückenlehne verhindert werden.

Die Ausgleichsmittel können durch eine Ausbuchtung in einem der Elemente des Koppelmechanismus gebildet werden, z.B. indem das nachgeordnete zweier Elemente des Koppelmechanismus eine Ausbuchtung aufweist, in der ein Abschnitt des vorgeschalteten Elementes bewegbar ist, ohne auf das nachgeordnete Element einzuwirken. Hierzu weist die Kontur der Ausbuchtung zumindest teilweise eine solche Krümmung, insbesondere einen solchen Radius aufweist, auf, dass darin ein Abschnitt des vorgschalteten Elementes, insbesondere in Form eines Koppelhebels, bewegbar ist, ohne auf das nachgeordnete Element einzuwirken, wobei der Abschnitt des Koppelhebels dann in die Ausbuchtung einfährt, wenn die Entriegelung der Feststellvorrichtung abgeschlossen ist.

Weiterhin können Ausgleichsmittel in die Feststellvorrichtung der Sitzlängsführung integriert sein. Hierzu können beispielsweise die üblicherweise in einer Feststellvorrichtung vorgesehenen Sperrzähne eine Überlänge aufweisen, so dass bei einer Einwirkung des Koppelmechanismus auf die Feststellvorrichtung der erste Teil der Bewegung der Sperrzähne lediglich zum Ausgleich von Toleranzen aufgrund unterschiedlicher Stellungen des Taumelbeschlages dient und die Entriegelungseffekte, d. h. das Ausheben der Sperrzähne aus zugeordneten Rastöffnungen der Sitzlängsführung erst im Anschluss daran auftreten.

Weitere Merkmale und Vorteile der Erfindung werden bei der nachfolgenden Beschreibung eines Ausführungsbeispiels anhand der Figuren deutlich werden.

Es zeigen:
- Figuren 1a und 1b: eine schematische Darstellung des Sitzgestells eines Kraftfahrzeugsitzes mit einer Rückenlehne in zwei unterschiedlichen Einstellungen der Lehnenneigung;
- Figuren 2a und 2b: einen Koppelmechanismus, über den die Rückenlehne aus Figur 1a bzw. 1b mit der Feststellvorrichtung einer Sitzlängsführung gekoppelt ist, jeweils in einem Zustand, der durch die Neigung der Rückenlehne gemäß Figur 1a bzw. 1b bewirkt ist;
- Fig. 3: zwei zueinander verdrehbare Haltescheiben, von denen die eine zur Aufnahme des lehnenseitigen Endes der Bowdenhülle und die andere zur Aufnahme des lehnenseitigen Endes der Seele eines Bowdenzugs dient, der einen Bestandteil des Koppelmechanismus zur Kopplung einer Sitzlehne an die Feststellvorrichtung einer Sitzlängsführung bildet;
- Figuren 4a bis 4d: eine über einen Bowdenzug mit der Sitzlehne eines Sitzgestells gekoppelte Hebelanordnung zur Entriegelung der Feststellvorrichtung einer Sitzlängsführung bei vier unterschiedlichen Einstellungen der Neigung der Rückenlehne;
- Figuren 5a bis 5c: eine detailliertere perspektivische Darstellung einer Anordnung gemäß Figur 4a bei drei unterschiedlichen Einstellungen der Neigung der Rückenlehne;
- Fig. 6: eine perspektivische Darstellung eines Teiles eines aus dem Stand der Technik bekanntes Sitzgestelles mit einer Sitzlängsführung, einer Feststellvorrichtung der Sitzlängsführung, einem Sitzseitenteil, an dem eine Rückenlehne schwenkbar lagerbar ist, sowie mit einer programmierbaren Memory-Einrichtung zum automatischen Auffinden einer vorgebbaren Sitzlängsposition;
- Fig. 6a: eine Rückansicht der Darstellung aus Fig. 6;
- Fig. 7: eine Darstellung gemäß Fig. 6 in einem Zustand, in dem die Rückenlehne nach vorne geklappt ist, um den Sitz mit vorgeklappter Rückenlehne verschieben zu können;
- Fig. 8: eine Darstellung gemäß Fig. 6 in einem Zustand, in dem bei hochgeklappter Rückenlehne in der Memory-Position ein Betätigungshebel betätigt wurde, um die Memory-Position neu einzustellen;
- Fig. 9: eine Darstellung gemäß Fig. 6 in einem Zustand, in dem die Memory-Position des Sitzes mit hochgeklappter Rückenlehne angefahren wird;
- Fig. 10: eine Darstellung gemäß Fig. 6 in einem Zustand, in dem die Memory-Position des Sitzes mit hochgeklappter Rückenlehne erreicht wird;
- Fig. 11: eine Seitenansicht eines Gestells eines Kraftfahrzeugsitzes.

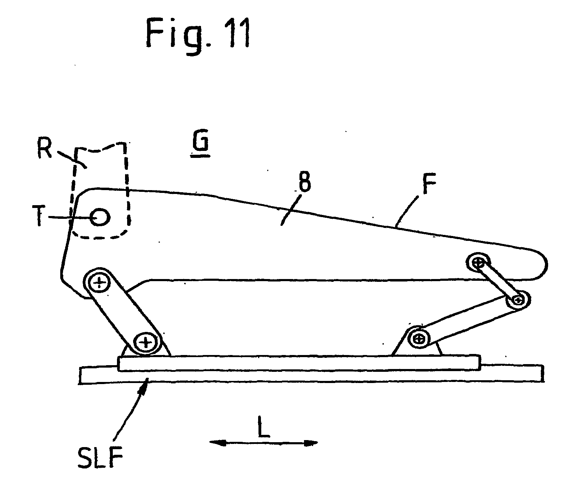

Das in Figur 11 in einer Seitenansicht dargestellte Sitzgestell G (Sitzuntergestell) umfaßt eine Sitzlängsführung SLF mit einer Sitzschiene, die in Sitzlängsrichtung L beweglich auf einer an der Fahrzeugkarosserie zu befestigenden Unterschiene lagert, und ein Sitzseitenteil 8, das über vordere und hintere Gelenkhebel höhenverstellbar an der Sitzschiene angelenkt ist. Auf seiner anderen, in Figur 11 nicht erkennbaren Längsseite weist das Sitzgestell G eine entsprechende Anordnung auf. Zwischen den beiden Sitzseitenteilen des Sitzgestelles G erstreckt sich eine Sitzfläche F, die ein Sitzpolster aufnimmt, auf dem ein Fahrzeuginsasse Platz nehmen kann.

Ferner weisen die Seitenteile 8 des Sitzgestelles G jeweils einen Taumelbeschlag T zur schwenkbaren Lagerung einer in Figur 11 gestrichelt angedeuteten Rückenlehne R auf.

Vorliegend werden als Teile des Sitzgestell jeweils alle diejenigen Bauteile verstanden, die auf der karosseriefesten Unterschiene in Sitzlängsrichtung bewegbar sind, also insbesondere die Sitzschiene, das Sitzseitenteil 8 sowie die hiermit verbundenen weiteren Bauteile des Sitzes.

Wird ein derartiger in Längsrichtung L verstellbarer Fahrzeugsitz für ein zweitüriges Fahrzeug verwendet, so ist es bekannt, zur Erleichterung des Einstiegs in den Fond des Fahrzeugs die Lehne an die Sitzlängsverstellung zu koppeln und zwar derart, daß bei einem Vorklappen der Rückenlehne R in Richtung auf die sich zwischen den Sitzseitenteilen 8 erstreckende Sitzfläche eine der Sitzlängsführung SLF zugeordnete Feststellvorrichtung entriegelt wird und der Sitz mit vorgeklappter Rückenlehne vorgeschoben werden kann. Es handelt sich hierbei um eine sogenannte Easy-Entry-Funktion.

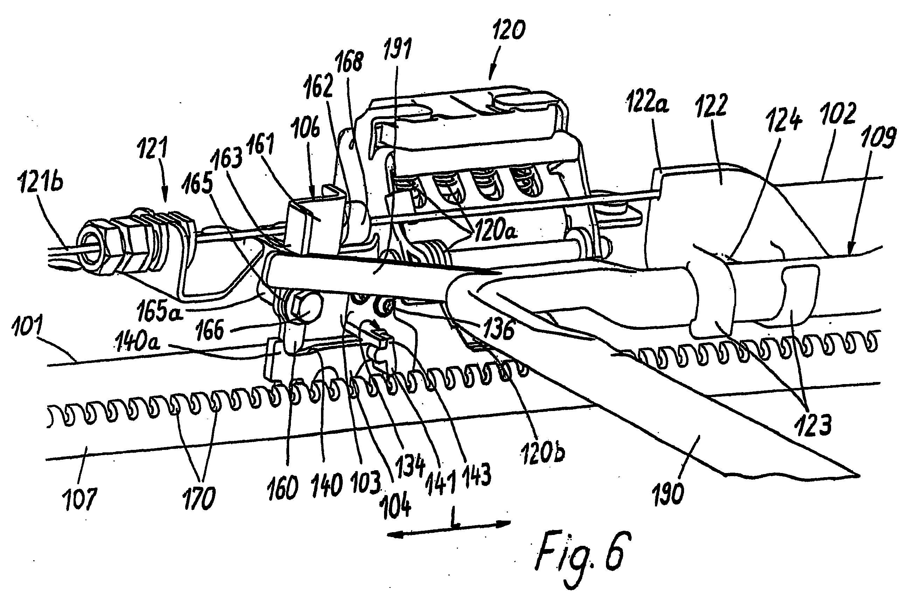

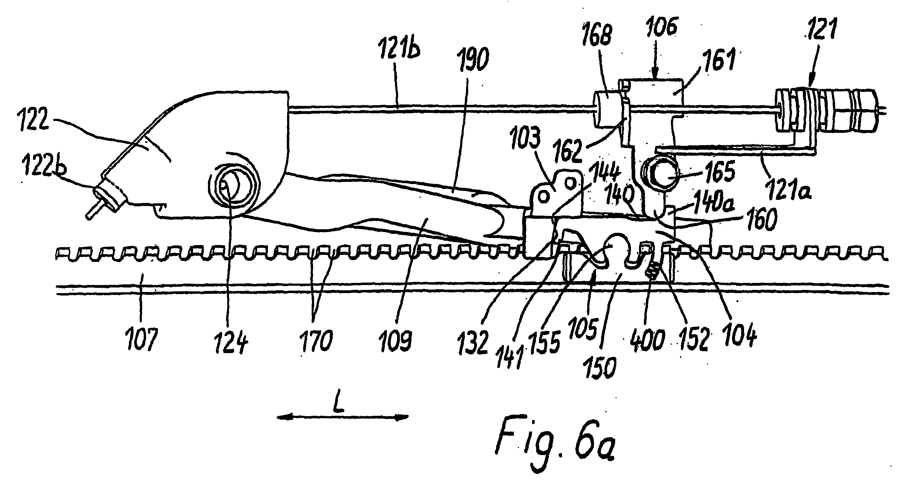

Im folgenden wird zunächst anhand einer in den Figuren 6 bis 10 dargestellten und aus der WO-A-00/55002 bekannten Sitzanordnung das Grundprinzip der Easy-Entry-Funktion bei Verwendung einer programmierbaren Memory-Einrichtung zum automatischen Auffinden einer vorgebbaren Sitzlängsposition erläutert. Für weitere Einzelheiten hierzu wird auf die WO-A-00/55002 verwiesen, die diesbezüglich ausdrücklich zum Gegenstand der vorliegenden Beschreibung gemacht wird.

In der perspektivischen Vorderansicht gemäß Figur 6 sowie der zugehörigen Rückansicht gemäß Figur 6a sind eine karosseriefeste Schiene 101 und eine daran in Sitzlängsrichtung L beweglich geführte Sitzschiene 102 dargestellt, wobei an der karosseriefesten Schiene 101 eine Rastschiene 107 mit einer Vielzahl in Sitzlängsrichtung L hintereinander angeordneter Rastöffnungen 170 befestigt ist. Die Sitzschiene 102 trägt die übrigen Komponenten des Sitzgestelles, vergl. Figur 11.

Die Sitzschiene 102 ist bezüglich der karosseriefesten Schiene 101 mittels einer Feststellvorrichtung 120 arretierbar. Hierbei kann es sich um eine übliche Feststellvorrichtung für eine Sitzlängsverstellung handeln. In den Figuren 6 und 6a sind das Gehäuse, ein schwenkbar gelagertes Betätigungselement 120b sowie eine auf das Betätigungselement 120b einwirkende Drehfeder einer bekannten Feststellvorrich-tung dargestellt, deren Gehäuse an der Sitzschiene (102) befestigt ist. Die Drehfeder dient u.a. der Herausnahme von Spiel aus der Anordnung, um Klappergeräusche zu verhindern.

Diese Feststellvorrichtung umfaßt beispielsweise gemäß der DE 299 10 720 U1 eine Mehrzahl innerhalb des Gehäuses angeordneter Sperrzähne, die - mittels in dem Gehäuse gelagerter Federn in Form von Schraubenfedern - elastisch in Richtung auf eine an der karosserieseitigen Schiene 1 befestigte, in den Figuren 6 und 6a nicht erkennbare, Rasteinrichtung vorgespannt sind. Aufgrund der auf die Sperrzähne wirkenden Vorspannung rasten die der Sitzschiene 102 zugeordneten Sperrzähne automatisch in die karroseriefeste Rasteinrichtung ein, so daß die Sitzlängsverstellung arretiert ist, wenn nicht mittels des hierfür vorgesehenen Betätigungselementes 120b die Sperrzähne außer Eingriff mit der Rasteinrichtung gebracht sind.

Da das Betätigungselement 120b der Feststellvorrichtung 120 mittels der Federanordnung 120a, die aus den innerhalb des Gehäuses angeordneten, auf die Sperrzähne einwirkenden Federn sowie der außerhalb des Gehäuses angeordneten Drehfeder besteht, entgegen der Richtung vorgespannt ist, in die es zum Entriegeln der Feststellvorrichtung 120 verschwenkt werden muß, kann die Feststellvorrichtung 120 nur dann entriegelt werden, wenn auf deren Betätigungselement 120b eine Kraft entgegen der Wirkung der Federanordnung 120a ausgeübt wird.

Zum Entriegeln der Feststellvorrichtung 120 kann das Betätigungselement 120b einerseits von einem Sitzbenutzer unmittelbar dadurch betätigt werden, daß dieser einen am Sitzgestell schwenkbar angelenkten, ein Querrohr 190 aufweisenden Betätigungshebel 109 an einem hierfür vorgesehenen (in den Figuren 6 und 6a nicht erkennbaren) Betätigungsgriff 190 ergreift und diesen entgegen dem Uhrzeigersinn verschwenkt, wodurch sich das Betätigungselement 120b entgegen der Vorspannung der Federanordnung 120a nach unten bewegt. Zum anderen kann die Feststellvorrichtung 120 auch durch Vorklappen der Sitzlehne entriegelt werden, wozu die Sitzlehne über einen Bowdenzug, der ein Seil 121b aufweist und dessen (nicht dargestellter) Bowden sich an einer Bowdenabstützung 121 abstützt, mit dem Betätigungshebel 109 gekoppelt ist. Ferner ist auf der Schwenkachse des Betätigungshebels 109 mittels eines Achsstummels 124 ein Getriebeteil 122 gelagert, das eine Führung 122a sowie eine Einhängung 122b für das Seil 121b des Bowdenzugs aufweist. Dieses Getriebeteil 122 setzt eine Straffung des Seiles 121b bei einem Vorklappen der Rückenlehne in eine Schwenkbewegung um, die wiederum durch zwei Arme 123 des Getriebes, welche den Betätigungshebel 109 umgreifen, auf diesen übertragen wird. Hierdurch verschwenkt der Betätigungshebel 109 bei einem Vorklappen der Rückenlehne im Uhrzeigersinn und entriegelt über das Betätigungselement 120b die Feststellvorrichtung 120.

Auf dem Seil 121b des Bowdenzugs ist zudem zwischen der Bowdenabstützung 121, die mittels eines Befestigungsbleches 121a an der Sitzschiene befestigt ist, und dem Getriebe 122 ein Seilnippel 168 befestigt, z.B. durch Verquetschen. Dem Seilnippel 168 ist ein Schaltelement in Form eines Schalthebels 106 zugeordnet, das mittels einer Lagerbuchse 165, eines Stufenbolzens 165a sowie einer Schraube 166 um eine durch die Längsachse des Stufenbolzens 165a gebildete Achse verschwenkbar gelagert und gleichzeitig an dem Sitzgestell bzw. dessen Sitzschiene 102 befestigt ist. Der Schalthebel 106 weist in einem oberen Abschnitt 161 einen Anschlag 162 auf, der unmittelbar neben dem Seilnippel 168 angeordnet ist und auf den der Seilnippel 168 in Sitzlängsrichtung einwirken kann, wodurch der Schalthebel 106 verschwenkt wird.

Der unterhalb der Lagerbuchse 165 sowie des Stufenbolzens 165a angeordnete zweite Endabschnitt des Schalthebels 106 bildet einen Betätigungsabschnitt 160, dem ein Betätigungsabschnitt einer Sperrklinke 104 der Memory-Einrichtung zugeordnet ist. Der Betätigungsabschnitt der Sperrklinke 104 wird dabei durch eine Betätigungsfläche 140 auf der Oberseite der Sperrklinke gebildet.

Der Schalthebel 106 ist vorliegend durch einen Fortsatz 191 des Betätigungshebels 109, auf dem sich der obere Abschnitt 161 des Schalthebels 106 mit einem Anschlag 163 vertikal (quer zur Sitzlängsrichtung L) abstützt, in der in den Figuren 6 und 6a gezeigten Position arretiert, in der dessen Betätigungsabschnitt 160 auf die Betätigungsfläche 140 der Sperrklinke 104 einwirkt. Das hierfür erforderliche Moment wird durch die Federanordnung 120a der Feststellvorrichtung 120 aufgebracht, die über das Betätigungselement 120b sowie den Betätigungshebel 109 auf den Hebelfortsatz 191 wirkt.

Alternativ oder zusätzlich kann die senkrechte Stellung des Schalthebels 106 auch durch eine unmittelbar dem Schalthebel 106 angeordnete Feder oder dadurch unterstützt werden, daß der Schalthebel 106 mit hinreichend Reibung gelagert ist, die durch die Wirkung der Druckfeder 400 der Sperrklinke 104 nicht überwunden werden kann.

Die Sperrklinke 104 selbst ist, wie insbesondere anhand Fig. 6a erkennbar, schwenkbar auf einem Lagerzapfen 155 eines Gleiters 105 gelagert, der mit einem Grundkörper 150 in Sitzlängsrichtung L beweglich neben den Rastöffnungen 170 der Rastschiene 107 geführt ist. Der Gleiter weist in seinem Grundkörper 150 eine Ausnehmung 152 auf, in der eine Druckfeder 400 angeordnet ist, die unterhalb des Betätigungsabschnittes 140 der Sperrklinke 104 auf diese einwirkt und dadurch die Sperrklinke 104 derart vorspannt, daß ein am anderen Ende der Sperrklinke 104 angeordneter Rasthaken 141 die Tendenz hat, in die Rastschiene 107 einzugreifen. Hieran wird in dem in den Figuren 6 und 6a dargestellten Zustand, in dem der Sitz mit nicht vorgeklappter Rückenlehne in der Memory-Position verriegelt ist, die Sperrklinke dadurch gehindert, daß der Betätigungsabschnitt 160 des Schalthebels 106 sich auf der Betätigungsfläche 140 der Sperrklinke 104 abstützt, so daß diese nicht um den Lagerzapfen 155 verschwenken kann, um den Rasthaken 141 mit der Rastschiene 107 in Eingriff zu bringen.

In dem in den Figuren 6 und 6a dargestellten Zustand befindet sich ferner ein Gegenanschlag 144 der Sperrklinke 104 in Kontakt mit einem Anschlag 132 eines Anschlagselementes 103, das mit Befestigungsschrauben 136 an der Sitzschiene 102 befestigt ist. Ferner befindet sich ein Mitneh mer 143 der Sperrklinke 104, der sich nach oben hin an den Anschlag 144 anschließt, in Eingriff mit einem Eingriffsbereich 134 des Anschlagselementes 103.

Wird in dem in den Fig. 6 und 6a dargestellten Zustand des Sitzes, in dem dieser in der Memory-Position verriegelt ist, die Rückenlehne nach vorne geklappt, so spannt sich das Seil 121b des Bowdenzuges und bewegt sich in Richtung auf das hintere (rückenlehnenseitige) Sitzende.

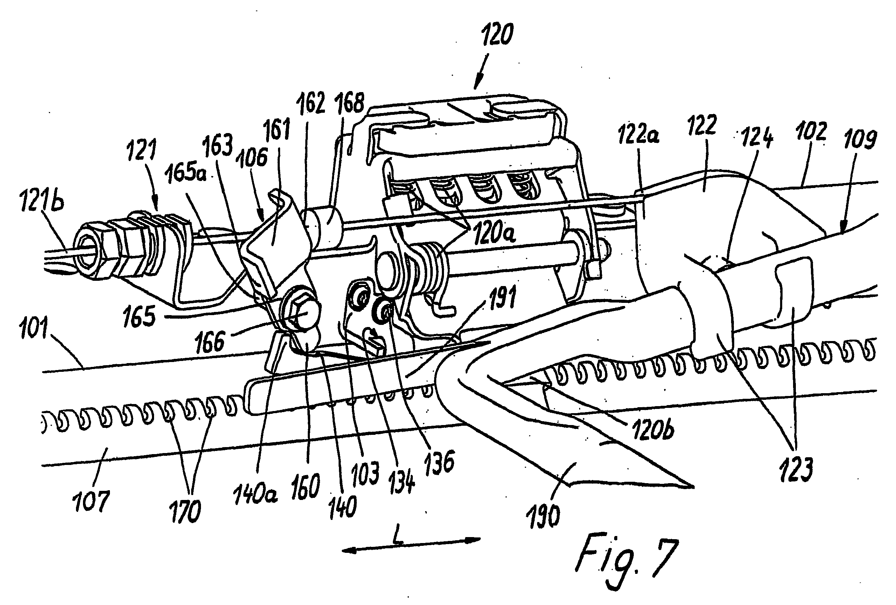

Hierdurch wird gemäß Fig. 7 zum einen der Betätigungshebel 109 über das Getriebeteil 122 sowie die Arme 123 entgegen dem Uhrzeigersinn verschwenkt, wobei er auf das Betätigungselement 120b einwirkt und die Feststellvorrichtung 120 entriegelt. Zum anderen bewegt sich der mit dem Seil 121b verquetschte Seilnippel 168 in Richtung des hinteren Sitzendes und wirkt dabei auf den Anschlag 162 im oberen Abschnitt 161 des Schalthebels 106 ein. Dabei wird der Schalthebel 106 entgegen dem Uhrzeigersinn verschwenkt, wobei dessen Betätigungsabschnitt 160 von der zugeordneten Betätigungsfläche 140 der Sperrklinke 104 abgehoben wird. Diese Schwenkbewegung des Schalthebels 106 ist möglich, da dieser nicht mehr durch den Hebelfortsatz 191 blockiert wird, der ja gemeinsam mit dem Betätigungshebel 109 nach unten verschwenkt wurde. Dadurch, daß der Schalthebel 106 die Sperrklinke 104 freigegeben hat, verschwenkt diese nun aufgrund der Wirkung der Druckfeder 400 (vergl. Fig. 6a) um den Lagerzapfen 155 des Gleiters 105, bis der Rasthaken 141 in eine Öffnung 170 der Rastschiene 107 eingreift. Hierbei wird die Sperrklinke 104 und somit insgesamt die Memory-Einrichtung verriegelt.

Die Schwenkbewegung der Sperrklinke 104 hat zudem die Folge, daß der Mitnehmer 143 der Sperrklinke 104 sowie der Eingriffsbereich 134 des Anschlagselementes 103 außer Eingriff geraten. Dies ist erforderlich, um das Sitzgestell verschieben zu können, da anderenfalls eine Bewegung des Sitzes durch die verriegelte Memory-Einrichtung blockiert würde.

Der Seilnippel 168 dient dabei hier als Sperrmittel, welches bei vorgeklappter Rückenlehne derart auf den Schalthebel 106 einwirkt, daß die Sperrklinke 104 nicht mittels des Schalthebels 106 entriegelt werden kann.

Die Anordnung ist derart ausgelegt, daß beim Vorklappen der Rückenlehne der Rasthaken 141 unter der Wirkung der Druckfeder 400 bereits in eine Rastöffnung 170 eingreifen kann, bevor die Feststellvorrichtung 120 soweit entriegelt ist, daß die Sitzschiene 102 bezüglich der karosseriefesten Schiene 101 verschiebbar ist. Hierdurch wird eine zuverlässige Speicherung der aktuellen Sitzlängsposition als Memory-Position gewährleistet. Sofern allerdings der Rasthaken 141 nicht unmittelbar in eine Rastöffnung 170 eingreifen kann, weil der Sitz derart positioniert ist, daß der Rasthaken 141 unter der Wirkung der Druckfeder 400 auf einem Steg zwischen zwei Rastöffnungen 170 aufschlägt, dann rastet der Rasthaken 141 erst nach einer geringfügigen Verschiebung des Sitzgestells in Sitzlängsrichtung L in die nächste Rastöffnung 170 ein, die er passiert. In einem solchen Fall ergibt sich also eine geringfügige Abweichung zwischen der Sitzlängsposition beim Vorklappen der Rückenlehne und der anschließend gespeicherten Memory-Position.

In dem in Fig. 7 gezeigten Zustand, der durch das Vorklappen der Rückenlehne erreicht wurde, kann das Sitzgestell nun mit vorgeklappter Rückenlehne in Sitzlängsrichtung L nach vorne verschoben werden, um den Einstieg eines Passagiers oder das Einschieben eines Gegenstandes in den Fond eines Kraftfahrzeugs zu erleichtern.

Wird der Sitz dann mit vorgeklappter Rückenlehne wieder nach hinten bewegt, so wird er spätestens in der durch die Sperrklinke 104 definierten Memory-Position automatisch angehalten. Denn beim Erreichen der Memory-Position gerät der Anschlag 132 des Sitzgestells mit dem Anschlag 144 der Memory-Einrichtung in Kontakt, wodurch eine weitere Bewegung des Sitzgestelles nach hinten verhindert wird.

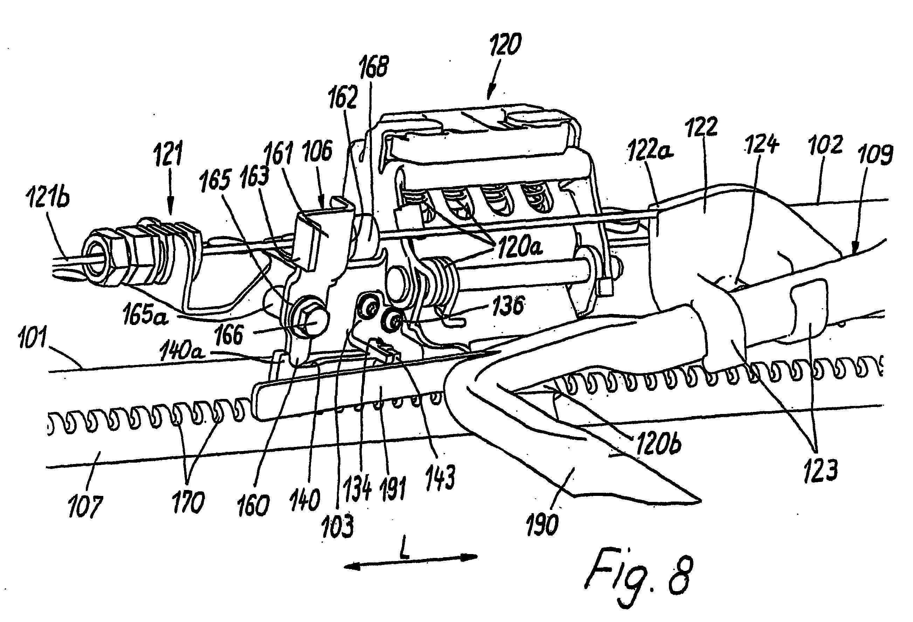

Wird sodann die Rückenlehne wieder in ihre Funktionsposition geklappt, dann löst sich die Spannung des Seiles 121b, und der Schalthebel 106 sowie der Betätigungshebel 109 mit dem daran befestigten Fortsatz 191 kehren zurück in die in den Fig. 6 und 6a dargestellte Lage. Wird sodann der Betätigungshebel 109 entgegen dem Uhrzeigersinn verschwenkt, um die Feststellvorrichtung 120 zu entriegeln, so stellt sich der in Fig. 8 gezeigte Zustand ein.

Beim manuellen Verschwenken des Betätigungshebels 109 mittels eines hierfür vorgesehenen Betätigungsgriffes wird zwar die Feststellvorrichtung 120 über das Betätigungselement 120b entriegelt, so daß das Sitzgestell in Sitzlängsrichtung L auf der karosseriefesten Schiene 101 bewegt werden kann; jedoch bleibt hierbei - im Unterschied zu einem Vorklappen der Rückenlehne - der Schalthebel 106 in seiner senkrechten Position, in der dessen Betätigungsabschnitt 160 vertikal auf die Betätigungsfläche 140 einwirkt. Hierdurch wird verhindert, daß die Sperrklinke 104 unter der Wirkung der Druckfeder 400 verriegelt wird.

Wegen des gemäß Fig. 8 nach unten verschwenkten Hebelfortsatzes 191, der dementsprechend nicht an dem zugeordneten Anschlag 163 des Schalthebels 106 anliegt, muß die vertikale Stellung des Schalthebels 106 beispielsweise durch eine geeignete Ausbildung der Betätigungsfläche 140 der Sperrklinke 104 gesichert werden. Die Betätigungsfläche 140 kann hierzu derart gekrümmt sein, daß sie unter der Wirkung der Druckfeder 400 der Sperrklinke 104 auf den Betätigungsabschnitt 160 des Schalthebels 106 kein Moment ausübt, das eine Schwenkbewegung des Schalthebels 106 entgegen dem Uhrzeigersinn zur Folge hätte. Mit anderen Worten ausgedrückt, muß das Zusammenspiel der Betätigungsfläche 140 der Sperrklinke 104 mit dem Betätigungsabschnitt 160 des Schalthebels 106 derart ausgelegt sein, daß durch die mittels der Druckfeder 400 von der Sperrklinke 104 her eingeleiteten Kräfte keine Schwenkbewegung des Schalthebels 106 entgegen dem Uhrzeigersinn ausgelöst wird. Eine Schwenkbewegung des Schalthebels 106 im Uhrzeigersinn wird demgegenüber durch den Seilnippel 168 blockiert.

Alternativ kann die senkrechte Stellung des Schalthebels 106 - wie bereits oben erwähnt - auch mittels eines geeigneten Federelementes oder durch hinreichend große Reibungskräfte gesichert werden.

Zusammenfassend führt die Betätigung des Betätigungshebels 109 in der Memory-Position des Sitzes (bei nicht vorgeklappter Rückenlehne) dazu, daß einerseits die Feststellvorrichtung 120 entriegelt wird, während gleichzeitig die Sperrklinke 104 und somit die Memory-Einrichtung insgesamt in dem entriegelten Zustand verbleibt, der bereits vor dem Verschwenken des Betätigungshebels 109 bestand, vergl. Figuren 6 und 6a. Außerdem greift der Mitnehmer 143 der Memory-Einrichtung in den Eingriffsbereich 134 des sitzschienenseitigen Anschlagselementes 103 ein.

In diesem Zustand führt eine Bewegung des Sitzgestelles in Sitzlängsrichtung L dazu, daß gleichzeitig die Sperrklin-ke 104 mitgenommen wird, so daß beim Verschieben des Sitzes zugleich auch eine neue Memory-Position eingestellt wird. Die neu eingestellte Memory-Position, die der durch Verschiebung des Sitzgestelles neu eingestellten Sitzlängsposition entspricht, wird jedoch nicht schon dann verriegelt, wenn schließlich der Betätigungshebel 109 losgelassen wird. Denn dies hat gemäß den Figuren 6 und 6a zunächst nur zur Folge, daß die Feststellvorrichtung 120 verriegelt wird und somit die Sitzschiene 102 bezüglich der karosseriefesten Schiene 101 arretiert ist. Eine Verriegelung der Memory-Einrichtung erfolgt demgegenüber gemäß Fig. 7 erst dann, wenn in der neuen Sitzlängsposition die Sitzlehne vorgeklappt wird. Sonach wird bei dem vorliegenden Ausführungsbeispiel die Memory-Einrichtung immer nur dann verriegelt, wenn der Sitz mit vorgeklappter Rückenlehne im Rahmen der Easy-Entry-Funktion nach vorne bewegt wird.

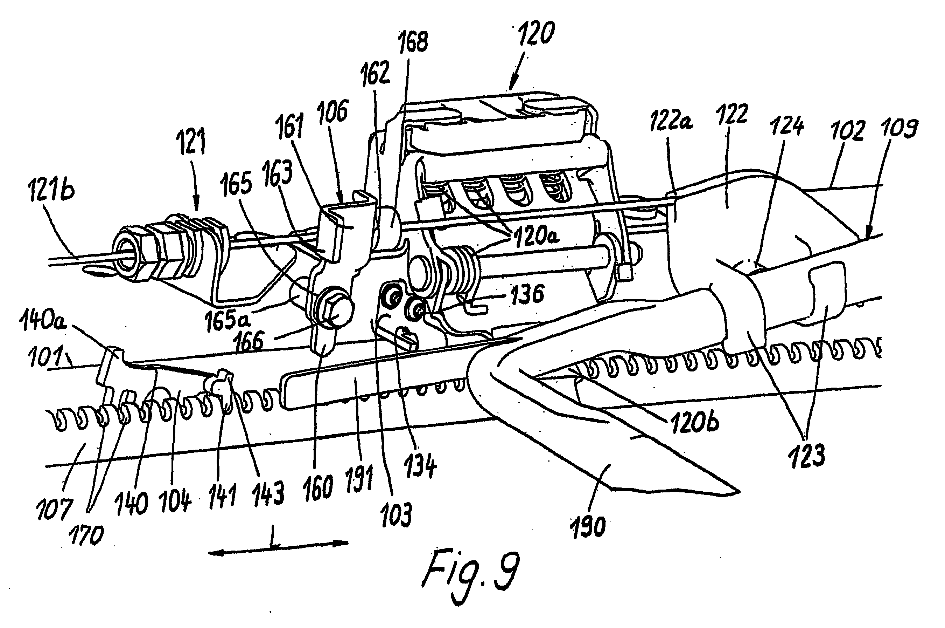

In Fig. 9 ist das Sitzgestell gezeigt, nachdem es zunächst mit vorgeklappter Rückenlehne in Sitzlängsrichtung L nach vorne verschoben wurde, wobei die Sperrklinke 104 verriegelt in der ursprünglichen Sitzposition zurückgelassen worden ist, und nachdem anschließend die Rückenlehne wieder in ihre Funktionsposition geklappt wurde. Außerdem ist der Betätigungshebel 109 derart verschwenkt, daß die Feststellvorrichtung 120 entriegelt ist und das Sitzgestell in Sitzlängsrichtung wahlweise nach vorne oder nach hinten verstellt werden kann. In jeder Sitzlängsposition, die hierbei erreicht wird, kann das Sitzgestell mittels der Feststellvorrichtung 120 bezüglich der karosseriefesten Schiene 1 arretiert werden, indem der Betätigungshebel 109 losgelassen wird.

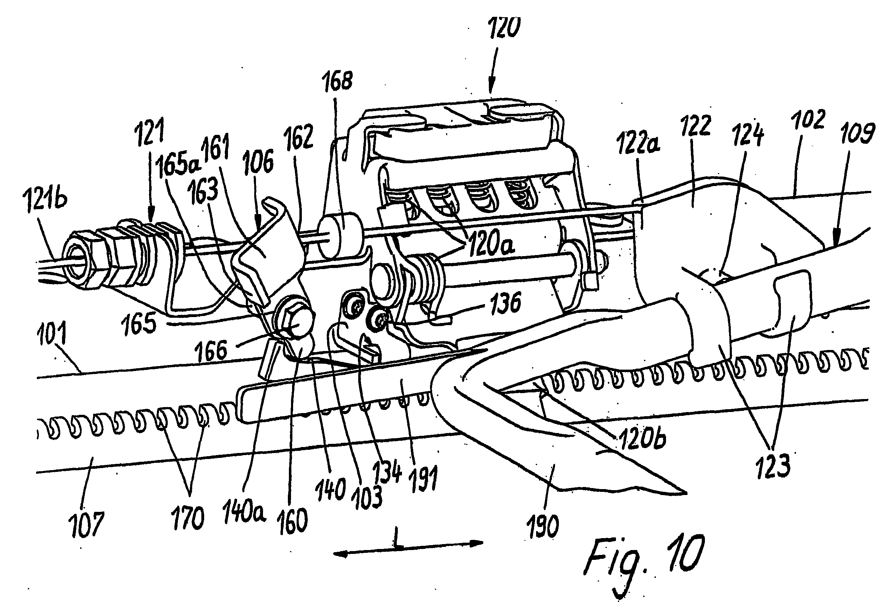

Fig. 10 zeigt schließlich den Zustand des Sitzgestells, wenn dieses mit aufgerichteter Rückenlehne bis in die Memory-Position zurückgefahren wird. Hierbei schlägt der Schalthebel 106 mit seinem Betätigungsabschnitt 160 an einem Vorsprung 140a an, der von der Betätigungsfläche 140 der Sperrklinke 104 vertikal nach oben absteht. Dies ist darauf zurückzuführen, daß sich die Sperrklinke 104 in dem verriegelten Zustand befindet, in dem sie mit ihrem Rasthaken 141 (vergl. Fig. 6a) in eine Rastöffnung 170 der Rastschiene 107 eingreift. Durch die hiermit verbundene Schrägstellung der Betätigungsfläche 140 der Sperrklinke 104 übt diese auf den Betätigungsabschnitt 160 des Schalthebels 106 ein Drehmoment mit einer Komponente parallel zur Sitzlängsrichtung L aus. Als Folge davon wird der Schalthebel 106 entgegen dem Uhrzeigersinn verschwenkt und dessen Betätigungsabschnitt 160 gerät in Anschlag mit dem Vorsprung 140a der Sperrklinke 104. Dies bewirkt, daß die Sperrklinke 104 weiterhin verriegelt bleibt, wenn das Sitzuntergestell die in Fig. 10 gezeigte Memory-Position erreicht.

Zusammenfassend wirkt demnach die Betätigungsfläche 140 im verriegelten Zustand der Sperrklinke 104 derart mit dem Betätigungsabschnitt 160 des Schalthebels 106 zusammen, daß dieser verschwenkt wird, wenn der Sitz mit aufgerichteter Rückenlehne in die Memory-Position geschoben wird, wodurch eine Entriegelung der Sperrklinke 104 verhindert wird. (Wenn der Sitz mit vorgeklappter Rückenlehne nach hinten in die Memory-Position geschoben wird, dann ist der Schalthebel 106 aufgrund der Wirkung des Seilnippels 168 ohnehin verschwenkt, vergl. Fig. 7, so daß auch in diesem Fall keine Entriegelung der Memory-Einrichtung erfolgen kann.) Andererseits wirken die Betätigungsfläche 140 der Sperrklinke 104 und der Betätigungsabschnitt 160 des Schalthebels 106 im entriegelten Zustand der Sperrklinke 104, vergl. Fig. 6, derart zusammen, daß die Sperrklinke 104 entriegelt bleibt, wie weiter oben anhand Fig. 6 näher ausgeführt wurde.

Wegen des verriegelten Zustandes der Sperrklinke 104 wird das Sitzgestell beim Erreichen der Memory-Position automatisch angehalten, wenn der Anschlag 132 des sitzgestellseitigen Anschlagselementes 103 mit dem Gegenanschlag 144 der Memory-Einrichtung (vergl. Fig. 6a) auf Block fährt.

Wird dann in der Memory-Position der Betätigungshebel 109 losgelassen, so wird dieser unter der Wirkung der Federanordnung 120a der Feststellvorrichtung 120 im Uhrzeigersinn verschwenkt, bis die Feststellvorrichtung 120 wieder verriegelt ist. Gleichzeitig wird durch den Fortsatz 191 des Betätigungshebels 109, der auf den abgewinkelten Anschlag 163 im oberen Abschnitt 161 des Schalthebels 106 einwirkt, der Schalthebel 106 im Uhrzeigersinn in seine senkrechte Stellung verschwenkt, wobei der Schalthebel 106 mit seinem Betätigungsabschnitt 160 auf die Betätigungsfläche 140 der Sperrklinke 104 einwirkt und diese (entgegen der Wirkung der Druckfeder 400) entriegelt (was eine entsprechende Auslegung der Federanordnung 120a erfordert). Der Sitz befindet sich dann wieder in dem anhand der Figuren 6 und 6a erläuterten Zustand mit hochgeklappter Rückenlehne in der Memory-Position.

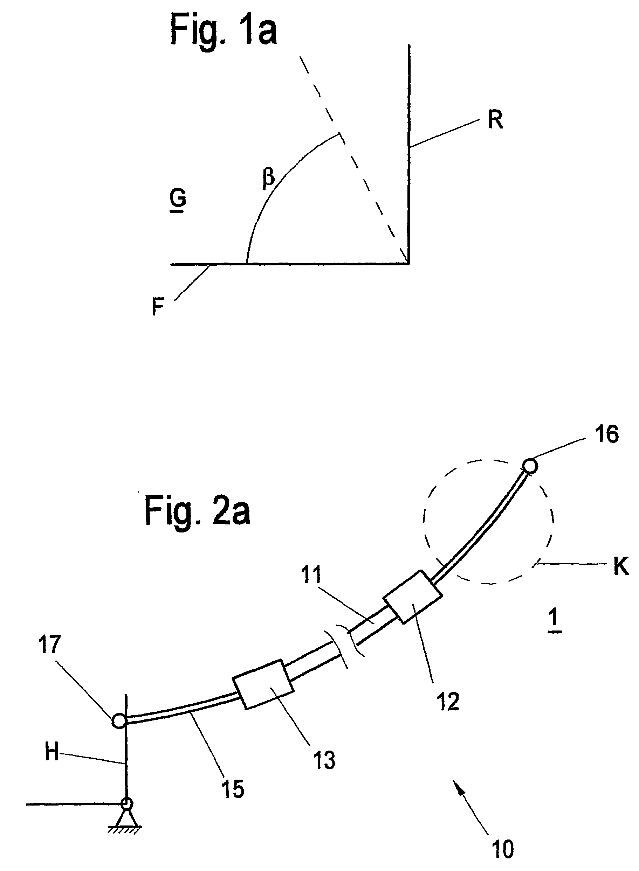

Anhand der Fig. 1a bis 4d werden nachfolgend unterschiedliche Ausführungsbeispiele dargestellt, wie gemäß der vorliegenden Erfindung ein Vorklappen der Rückenlehne auf die Sitzfläche des Sitzgestells über den Koppelmechanismus übertragen wird, der daraufhin die Feststellvorrichtung der Längsführung entriegelt.

Die nachfolgenden Ausführungen zu den Figuren 1a bis 4d beschränken sich im wesentlichen auf den Aufbau und die Funktion des Koppelmechanismus. Auf die übrigen Baugruppen der Sitzanordnung, wie z.B. die Schienenlängsführung, die Feststellvorrichtung der Schienenlängsführung, die Memory-Einrichtung sowie das Zusammenwirken dieser Baugruppen wird nachfolgend nicht näher eingegangen. Diesbezüglich wird auf die obigen Ausführungen zu den Figuren 6 bis 10 verwiesen.

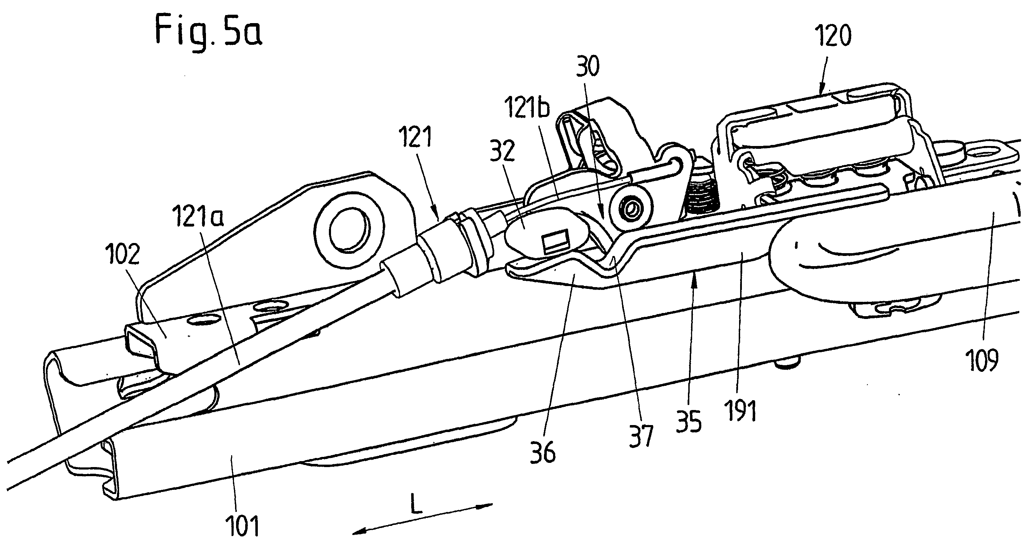

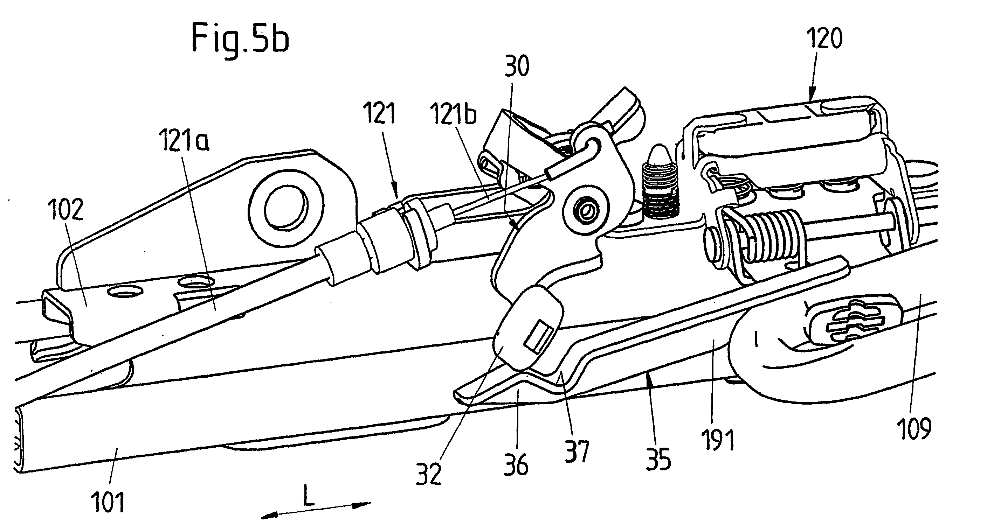

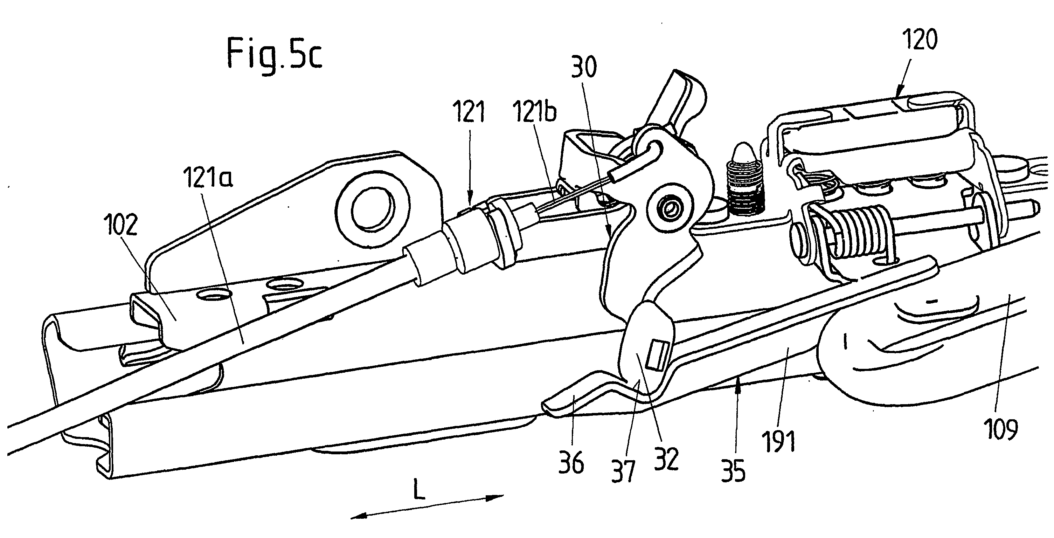

In Figur 1a ist schematisch das in Figur 5 gezeigte Sitzgestell G in einem Zustand dargestellt, in dem die Rückenlehne R vertikal eingestellt ist. Dies entspricht in der Regel der vordersten Gebrauchsposition der Rückenlehne, d. h. der vordersten Position des Gebrauchsbereiches, in dem die Neigung der Rückenlehne L verstellbar ist, um sie an unterschiedliche Bedürfnisse einer auf dem entsprechenden Sitz befindlichen Person anpassen zu können.

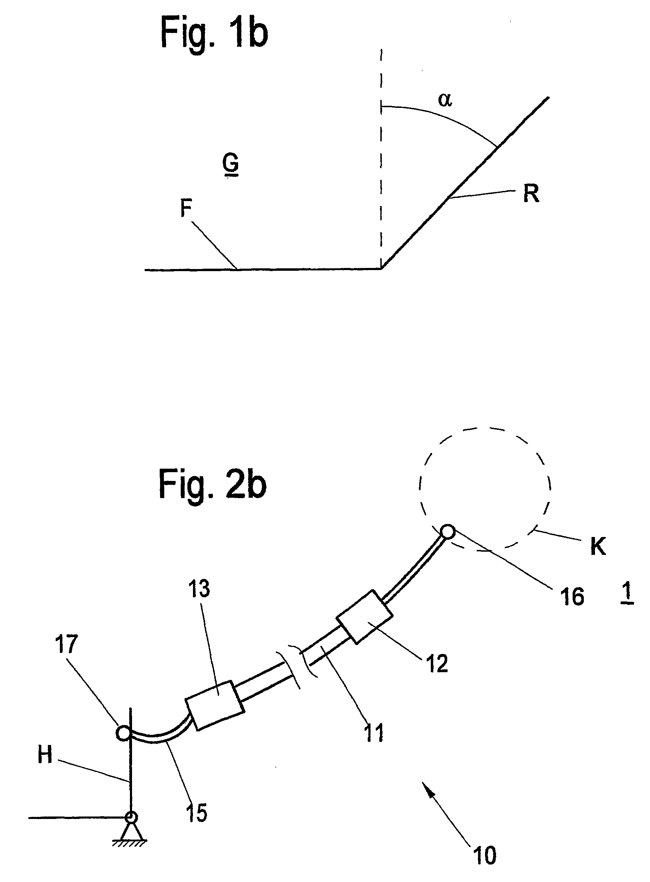

Figur 1b zeigt das Sitzgestell aus Figur 1a in einem Zustand, in dem die Rückenlehne R aus der vertikalen Position heraus um einen Winkel α in eine Neigungsposition verstellt worden ist, in der die Rückenlehne R stark nach hinten geneigt ist.

Mit der erfindungsgemäßen Kopplung kann - wie nachfolgend anhand der Figuren 2a und 2b dargelegt werden wird - erreicht werden, dass bei einem Vorklappen der Rückenlehne zum Zwecke des Auslösens der Easy-Entry-Funktion sowohl aus dem in Figur 1a dargestellten Zustand (im wesentlichen senkrechte Rückenlehne R) als auch aus dem in Figur 1b dargestellten Zustand heraus (stark nach hinten geneigte Rückenlehne R) die Entriegelung der Feststellvorrichtung für die Sitzlängsführung bei der gleichen Neigung der Rückenlehne R nach vorne stattfindet; im Beispiel bei einem Neigungswinkel von etwa 20° gegenüber der Vertikalen. Dies bedeutet, dass die Entriegelung der Feststellvorrichtung durch Vorklappen der Rückenlehne jeweils dann stattfindet, wenn die Rückenlehne einen definierten Winkel β von der Schwenkposition entfernt ist, in der sie auf der Sitzfläche F des Sitzgestells aufliegt.

In Figur 2a ist schematisch ein Bowdenzug 10 dargestellt, der einen Bestandteil des Koppelmechanismus 1 zur Kopplung der Rückenlehne mit der Feststellvorrichtung der Sitzlängsführung dient. Der Bowdenzug 10 umfaßt eine Bowdenhülle 11 und eine Seele 15. Die Bowdenhülle 11 ist mit ihrem lehnenseitigen Ende 12 mittels eines Bowdenzugbockes an einem Seitenteil des Sitzgestells befestigbar. Das andere, der zu entriegelnden Feststellvorrichtung zugewandte Ende 13 der Bowdenhülle 11 wird an einem Bowdenzugbock der sitzseitigen Schiene (Oberschiene) der Schienenlängsführung befestigt.

Die Seele 15 des Bowdenzugs erstreckt sich von einem Taumelbeschlag T der Sitzlehne R (vergleiche Figur 5) bis zu einem in Figur 2a symbolisch dargestellten Betätigungshebel H zum Entriegeln der Feststellvorrichtung der Sitzlängsführung. Dementsprechend ist die Seele 15 des Bowdenzugs 10 mit ihrem der Sitzlehne zugeordneten, die Eingangsseite des Koppelmechanismus repräsentierenden Ende 16 an dem Taumelbeschlag T der Sitzlehne R (vergleiche Figur 5) und mit ihrem anderen an der Ausgangsseite des Koppelmechanismus vorgesehenen Ende 17 an dem Betätigungshebel H fixiert.

Mit K ist in Figur 2a eine Kurve bezeichnet, entlang der sich das lehnenseitige Ende 16 der Seele 15 des Bowdenzuges 10 bei einer Einstellung der Neigung der Rückenlehne bewegt. Diese Kurve K repräsentiert also die Taumelbewegung des Taumelbeschlages und die hierdurch ausgelöste Bewegung des lehnenseitigen Endes 16 der Seele 15 des Bowdenzuges 10.

Es ist erkennbar, dass das lehnenseitige Ende 16 der Seele 15 in dem in Figur 2a repräsentierten Zustand des Koppelmechanismus 1 (entsprechend einer vertikal eingestellten Rückenlehne R gemäß Figur 1a) den größtmöglichen Abstand von dem Betätigungshebel H aufweist, der bei einer Bewegung dieses Endes 16 der Seele 15 entlang der Kurve K auftreten kann.

In Figur 2b ist demgegenüber der Koppelmechanismus 1 in dem Zustand dargestellt, in dem die Rückenlehne R in eine stark nach hinten geneigte Position eingestellt ist. In diesem Zustand weist das lehnenseitige Ende 16 der Seele 15 des Bowdenzugs 10 den kleinstmöglichen Abstand von dem Betätigungshebel H auf.

Erfindungsgemäß weist die Seele 15 des Bowdenzugs 10 in dem in Figur 2b dargestellten Zustand des Koppelmechanismus 1 eine Lose auf, die so dimensioniert ist, dass die Seele 15 bei einem Verschwenken der Rückenlehne R aus der in Figur 2b dargestellten stark nach hinten geneigten Schwenkposition in die in Figur 1a dargestellte vertikale Position gerade aufgehoben wird, also das Seil sich beim Erreichen der vertikalen Position zu straffen beginnt. Damit setzt die Entriegelung der Feststellvorrichtung der Sitzlängsführung mittels des Koppelmechanismus 1, insbesondere des Bowdenzugs 10 ein, in dem die Seele 15 mit zunehmender Straffung über den Betätigungshebel H auf die Feststellvorrichtung einwirkt, bis diese entriegelt ist. Die Entriegelung ist jeweils abgeschlossen, wenn die Rückenlehne R um etwa 20° gegenüber der Vertikalen nach vorne vorgeklappt ist. Der Sitz kann dann zur Ausübung der Easy-Entry-Funktion nach vorne verschoben werden, um den Einstieg von Personen in den Fond des Kraftfahrzeugs zu erleichtern.

Dabei sind Mittel zur Führung des Bowdenzuges 10, insbesondere der Seele 15, vorgesehen, die sicherstellen, dass diese bei einem Vorklappen der Rückenlehne R über die in Figur 1a gezeigte Position hinaus derart geführt wird, dass es tatsächlich zu einer weiteren Straffung der Seele 15 kommt.

Der in den Figuren 2a und 2b dargestellte Koppelmechanismus hat den Vorteil, dass eine Kompensation der Taumelbewegung durch eine einfache Lose in der Seele des Bowdenzugs erfolgt. Dies bringt noch den positiven Nebeneffekt mit sich, dass der Verschleiß des Bowdenzugs minimiert wird, da der Bowdenzug lediglich in einer einzigen Gebrauchsposition (nämlich der vordersten, im Beispiel vertikalen Gebrauchsposition) gestrafft ist; hierdurch wird der mit einer permanenten Straffung der Seele einhergehende Verschleiß vermieden.

Um Klappergeräusche des Koppelmechanismus im Betrieb des Fahrzeugs als Folge der Lose in der Seele des Bowdenzugs auszuschließen, genügt eine kleine schwach dimensionierte Feder, die entweder an der Seele 15 des Bowdenzugs 10 unmittelbar angreift oder auf ein anderes Teil des Koppelmechanismus, wie z. B. den Betätigungshebel H, einwirkt.

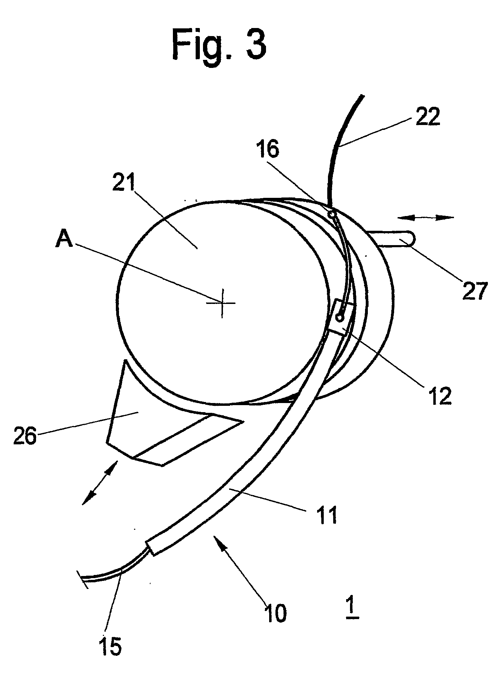

Bei dem in Figur 3 dargestellten Ausführungsbeispiel sind das lehnenseitige Ende 12 der Bowdenhülle 11 sowie das lehnenseitige Ende 16 der Seele 15 des Bowdenzugs 10 an jeweils einer von zwei zueinander verdrehbaren Haltescheiben 21, 22 befestigt, die beispielsweise lose auf der Taumelachse A des Lehnenbeschlages (Taumelbeschlages) gelagert sind. Aufgrund der losen Lagerung der beiden Haltescheiben 21, 22 auf einer gemeinsamen Achse haben eine Einstellung der Lehnenneigung bzw. ein Vorklappen der Rückenlehne zum Zwecke des Auslösens der Easy-Entry-Funktion zunächst keine Auswirkung auf die Straffung der Seele 15 des Bowdenzugs 10, so dass keine Entriegelung der Feststellvorrichtung über den Bowdenzug bzw. durch Straffung der Seele des Bowdenzugs 10 erfolgen kann.

Wird jedoch beim Vorklappen der Rückenlehne zum Zwecke des Auslösens der Easy-Entry-Funktion die vorderste Gebrauchsposition der Rückenlehne bzw. die vorderste Position des Gebrauchsbereiches der Rückenlehne R (vergleiche Figur 1a) überschritten, so fährt einerseits ein Verriegelungselement in Form eines Verriegelungsstiftes 27 aus dem Taumelbeschlag in die das eine Ende 16 der Seele 15 aufnehmende Haltescheibe 22 ein. Diese wird dadurch im weiteren von dem Taumelbeschlag mitgenommen, was wiederum eine Mitnahme des an der Haltescheibe 22 befestigten Endes 16 der Seele 15 des Bowdenzugs 10 zur Folge hat.

Gleichzeitig wird die andere Haltescheibe 21, an der das lehnenseitige Ende 12 der Bowdenhülle 11 fixiert ist, mittels eines Blockierelementes 26, das beispielsweise an einem Sitzseitenteil angeordnet ist, blockiert. Diese Haltescheibe 21 kann daher keine weitere Bewegung ausführen. Im Ergebnis kommt es daher bei einem weiteren Verschwenken der Rückenlehne zu einer Relativbewegung zwischen dem lehnenseitigen Ende 16 der Seele 15 und dem lehnenseitigen Ende 12 der Hülle 11 des Bowdenzugs 10. Hierdurch wird die Seele zunehmend gestrafft und löst eine Entriegelung der Feststellvorrichtung der Sitzlängsführung aus.

Im Ergebnis wird also auch bei diesem Ausführungsbeispiel erreicht, dass die Entriegelung der Feststellvorrichtung beim Vorklappen der Rückenlehne - unabhängig von der zuvor eingestellten Gebrauchsposition der Rückenlehne - stets bei einer definierten Stellung der Rückenlehne beginnt und somit bei einem definierten Klappwinkel der Rückenlehne nach vorne erreicht ist.

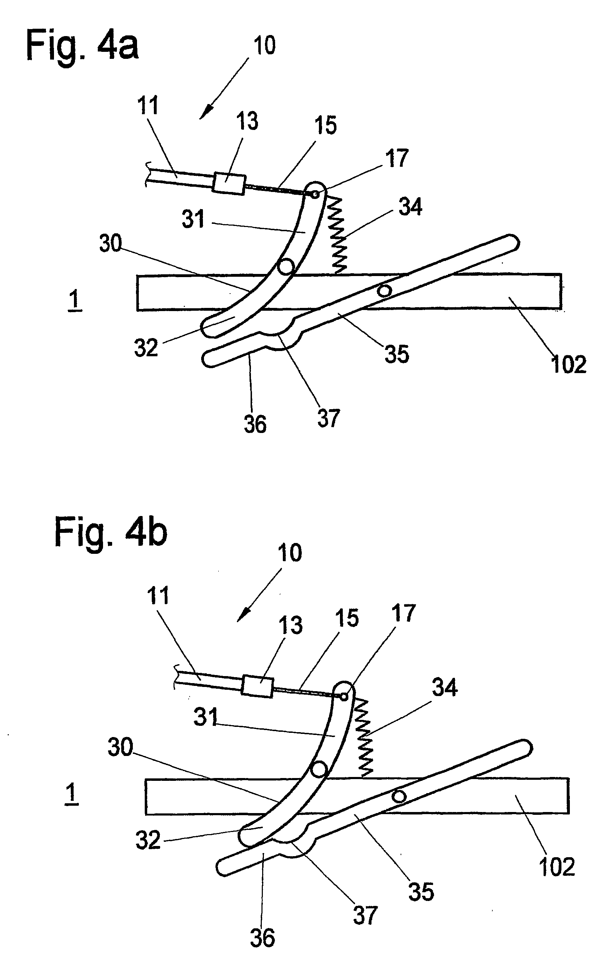

In den Figuren 4a bis 4d ist ein Ausführungsbeispiel des Koppelmechanismus 1 dargestellt, bei dem das der Feststellvorrichtung der Sitzlängsführung bzw. dem zur Entriegelung dieser Feststellvorrichtung vorgesehenen Betätigungshebel zugeordnete Ende 17 der Seele 15 des Bowdenzugs 10 an einem Ende 31 eines an der sitzseitigen Schiene der Schienenlängsführung (Oberschiene 102) schwenkbar gelagerten Auslösehebels 30 angreift. Das andere Ende 32 dieses Auslösehebels 30 wirkt mit einem weiteren, nachgeordneten Hebel 35 zusammen, der wiederum mit einem Betätigungsabschnitt 36 auf die Feststellvorrichtung der Sitzlängsführung einwirken kann, um diese zu entriegeln. Auch dieser weitere, nachgeordnete Hebel 35 ist schwenkbar an der sitzseitigen Schiene (Oberschiene 102) der Sitzlängsführung gelagert. Der Auslösehebel 30 ist dabei mittels einer Feder 34 entgegen der Wirkrichtung der Seele 15 des Bowdenzugs 10 bei einem Straffen der Seele vorgespannt.

Figur 4a zeigt diesen Koppelmechanismus 1 in einem Zustand, in dem die Rückenlehne R - beispielsweise gemäß Figur 1b - nach hinten geneigt eingestellt ist. Hierbei befindet sich das untere Ende 32 des Auslösehebels 30 außer Eingriff mit dem Betätigungsabschnitt 36 des nachgeordneten, weiteren Hebels 35. Beim Vorklappen der Rückenlehne zum Zwecke des Auslösens der Easy-Entry-Funktion in den Bowdenzug 10 eingeleitete Kräfte haben daher zunächst keine Entriegelung der Feststellvorrichtung der Sitzlängsführung zur Folge.

Bei einem weiteren Vorklappen der Rückenlehne gerät der Auslösehebel 30 mit seinem unteren Ende 32 mit dem Betätigungsabschnitt 36 des weiteren, nachgeordneten Hebels 35 in Kontakt, sobald sich die Rückenlehne R in ihrer vorderen Gebrauchsposition (vergleiche Figur 1a) befindet. In diesem Moment beginnt der Auslösehebel 30 über den weiteren, nachgeordneten Hebel 35 auf die Feststellvorrichtung einzuwirken und diese zu entriegeln. Dieser Zustand ist in Figur 4b dargestellt.

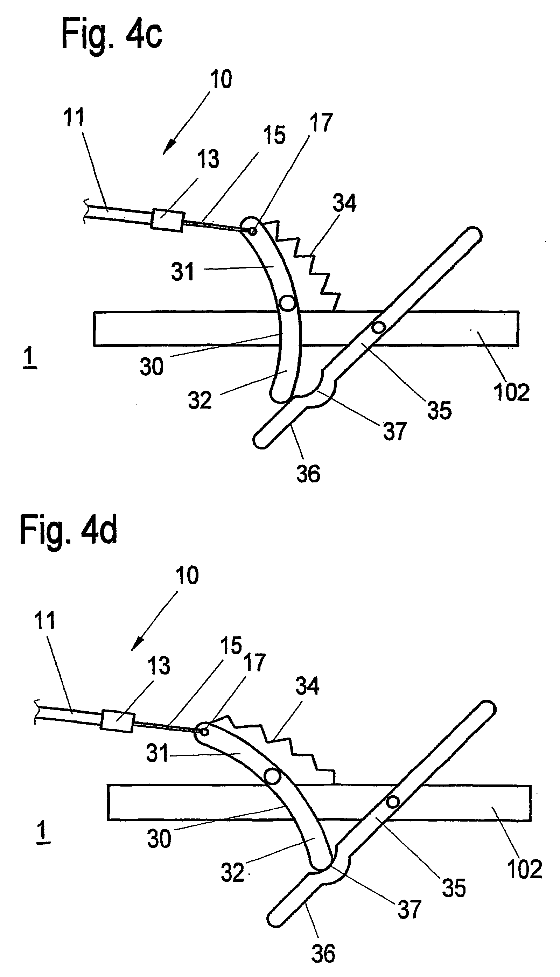

Die Entriegelung der Feststellvorrichtung ist abgeschlossen, wenn der nachgeordnete Hebel 35 durch den Auslösehebel 30 hinreichend weit verschwenkt wurde, wie in Figur 4c dargestellt.

Bei einem etwaigen weiteren Vorklappen der Rückenlehne R gerät der Auslösehebel 30 dann mit seinem unteren Ende 32 in eine Ausbuchtung 37 des Betätigungsabschnitts 36 des nachgeordneten Hebels 35. Die Rundung dieser Ausbuchtung 37 ist so gewählt, dass sich das untere Ende 32 des Auslösehebels 30 beim Verschwenken des Auslösehebels 30 darin bewegen kann, ohne eine weitere Bewegung des nachgeordneten Hebels 35 auszulösen. Hierdurch kann der Überhub bei einem Vorklappen der Rückenlehne über den Punkt hinaus, in dem die Feststellvorrichtung vollständig entriegelt ist, kompensiert werden, vergleiche Figur 4d.

Eine derartige Überhubkompensation mittels zweier zusammenwirkender Hebel 30, 35 kann auch mit den Ausführungsbeispiel gemäß den Figuren 2a, 2b sowie Figur 3 kombiniert werden, indem der dort vorgesehene Betätigungshebel H jeweils durch die Hebel 30, 35 ersetzt wird. Diese Anordnung zur Überhubkompensation ist sogar unabhängig davon, ob überhaupt gemäß der vorliegenden Erfindung Ausgleichsmittel zur Kompensation der Taumelbewegung vor dem Entriegeln der Feststellvorrichtung vorgesehen sind. Die Überhubkompensation mittels der Hebel 30, 35 stellt somit einen eigenständigen Erfindungsgedanken dar.

Gemäß Figur 5a ist das in Figur 4a gezeigte Ausführungsbeispiel eines Koppelmechanismus integriert in eine Schienenanordnung mit Easy-Entry-Mechanismus, wie sie in den Figuren 6 bis 10 dargestellt ist. Diese Anordnung umfaßt insbesondere eine karosseriefeste Schiene 101 (Unterschiene) und eine bezüglich der karosseriefesten Schiene 101 in Sitzlängsrichtung L beweglich geführte Sitzschiene 102 (Oberschiene), die an der karosseriefesten Schiene 101 mittels einer Feststellvorrichtung 120 arretierbar ist. Diese Feststellvorrichtung 120 ist in der vorstehend anhand der Figuren 6 bis 10 beschriebenen Weise über einen Bowdenzug 121a, 121b mit einer Bowdenabstützung 121 und einem in der Bowdenhülle 121a geführten Seil 121b (als Seele) mit der Rückenlehne eines Kraftfahrzeugsitzes gekoppelt, um beim Vorklappen der Rückenlehne die Feststellvorrichtung 120 zum Auslösen der Easy-Entry-Funktion entriegeln zu können.

Der zur Koppelung der Feststellvorrichtung 120 an die Rückenlehne des Kraftfahrzeugsitzes dienende Koppelmechanismus weist neben dem Bowdenzug mit der Seele 121b einen Betätigungshebel 109 mit einem Fortsatz 191 auf, wie er anhand der Figuren 6 bis 10 beschrieben worden ist, und der vorliegend, entsprechend den Ausführungen zu den Figuren 4a bis 4d, als ein an seinem Betätigungsabschnitt 36 mit einer Ausbuchtung 37 versehener Hebel 35 dient. Diesem Hebel 35 vorgeschaltet ist ein Auslösehebel 30, der entsprechend dem Auslösehebel 30 aus den Figuren 4a bis 4d mit der Seele 121b des Bowdenzugs gekoppelt ist, so dass er beim Vorklappen der Rückenlehne des Fahrzeugsitzes zum Entriegeln der Feststellvorrichtung 120 verschwenkt werden kann. Dieser Auslösehebel 30 entspricht dem Getriebeteil 122 aus den Figuren 6 bis 10, allerdings mit dem wichtigen Unterschied, dass der Auslösehebel 30 nicht unmittelbar an dem Betätigungshebel 109 angreift, sondern vielmehr mit einem Ende 32 auf dem Betätigungsabschnitt 36 des an dem Betätigungshebel 109 vorgesehenen Fortsatzes 191 einwirkt.

Figur 5a zeigt den Koppelmechanismus zur Ankopplung der Rückenlehne an die Feststellvorrichtung 120 - entsprechend der Darstellung in Figur 4b - in einem Zustand, indem die Rückenlehne R - beispielsweise gemäß Figur 1a - im wesentlichen senkrecht verläuft, sich also in ihrer vorderen Gebrauchsposition befindet.

Wird aus dieser Position heraus die Rückenlehne nach vorne geklappt, so wird das Seil 121b des Bowdenzugs gestrafft und der Auslösehebel 30 verschwenkt entgegen dem Uhrzeigersinn, wobei er mit seinem einen Ende 32 auf den Betätigungsabschnitt 36 des nachgeordneten Hebels 35 einwirkt, so dass dieser, insbesondere dessen Betätigungshebel 109, zum Entriegeln der Feststellvorrichtung 120 verschwenkt wird.

Die Entriegelung der Feststellvorrichtung ist abgeschlossen, wenn der nachgeordnete Hebel 35 und damit der Betätigungshebel 109 als ein Bestandteil des nachgeordneten Hebels 35 so weit verschwenkt worden ist, dass die Sperrzähne der Feststellvorrichtung 120 vollständig aus der zugeordneten karosseriefesten Rasteinrichtung ausgehoben sind.

Bei einem etwaigen weiteren Vorklappen der Rückenlehne gerät der Auslösehebel 30 dann mit seinem unteren Ende 32 in die Ausbuchtung 37 des Betätigungsabschnittes 36 des nachgeordneten Hebels 35. Diese Ausbuchtung ist derart ausgestaltet, dass sich das untere Ende 32 des Betätigungshebels 30 darin bewegen kann, ohne eine weitere Bewegung des nachgeordneten Hebels 35 auszulösen. Hierdurch kann der Überhub bei einem Vorklappen der Rückenlehne über den Punkt hinaus, in dem die Feststellvorrichtung 120 vollständig entriegelt ist, kompensiert werden, vergleiche Figur 5c. Insbesondere wird verhindert, dass es bei einem Vorklappen der Rückenlehne über den Punkt hinaus, in dem die Festellvorrichtung 120 vollständig entriegelt ist, zu einer weiteren, zusätzlichen Einwirkung auf das Betätigungselement 120b (vergleiche Figur 6) der Feststellvorrichtung 120 kommt, d.h., es wird verhindert, dass das Betätigungselement 120b nach vollständigem Entriegeln der Feststellvorrichtung 120 noch weiter (zusätzlich) ausgelenkt wird. Hierdurch soll eine Beschädigung der Feststellvorrichtung 120, beispielsweise von deren Rückstellfedern, durch eine Überbeanspruchung als Folge des Vorklappens der Rückenlehne verhindert werden.

## Patentansprüche

1. Kraftfahrzeugsitz mit
- einem Sitzgestell (G),
- einer schwenkbar gelagerten Rückenlehne (R) des Sitzgestelles (G), die einerseits durch Verschwenken in einem Gebrauchsbereich zwischen verschiedenen Gebrauchspositionen einstellbar ist und andererseits in einem entriegelten Zustand durch Verschwenken in Richtung auf die Sitzfläche (F) des Sitzgestelles (G) vorklappbar ist,
- einer Sitzlängsführung (101, 102) zur Einstellung der Sitzlängsposition,
- einer Feststellvorrichtung (120) zur Verriegelung einer zuvor eingestellten Sitzlängsposition,
- einem Koppelmechanismus (1), über den die Rückenlehne (R) mit der Feststellvorrichtung (120) derart gekoppelt ist, dass die Feststellvorrichtung (120) beim Vorklappen der Rückenlehne (R) entriegelbar ist, und
- einem Taumelbeschlag (T) der Rückenlehne (R), der beim Verschwenken der Rückenlehne (R) um eine Taumelachse (A) taumelt und mit dem die Eingangsseite des Koppelmechanismus (1) gekoppelt ist,
wobei
- der Koppelmechanismus (1) ein Zugmittel (15) umfasst, das die Seele eines Bowdenzugs (10) bildet und das bei einem Verschwenken der Rückenlehne (R) Kräfte zur Ausgangsseite des Koppelmechanismus (1) überträgt, so dass der Koppelmechanismus (1) auf die Feststellvorrichtung (120) einwirken kann, und das an einer um eine Achse schwenkbar gelagerten Halterung (22) festgelegt ist und
- Ausgleichsmittel vorgesehen sind, die bei einem Verschwenken der Rückenlehne (R) zumindest über einen Teilbereich des Gebrauchsbereiches eine Entriegelung der Feststellvorrichtung verhindern, indem die Halterung (22) von dem Taumelbeschlag (T) bei einem Verschwenken der Rückenlehne (R) innerhalb des Teilbereiches des Gebrauchsbereiches nicht mitgenommen wird, und wobei zur beschlagseitigen Fixierung einer Bowdenhülle (11) des Bowdenzugs (10) einerseits und der Seele (15) des Bowdenzugs (10) andererseits zwei zueinander verdrehbare, um eine Achse (A) schwenkbar gelagerte Halterungen (21, 22) vorgesehen sind, die bei einem Vorklappen der Rückenlehne (R) gegeneinander verdreht werden, wenn sich die Rückenlehne (R) außerhalb des Teilbereiches des Gebrauchsbereiches befindet.

2. Kraftfahrzeugsitz nach Anspruch 1, **dadurch gekennzeichnet, dass** die Ausgleichsmittel zu einer Kompensation der Einwirkung der Rückenlehne (R) auf den Koppelmechanismus (1) beim Verschwenken der Rückenlehne (R) in dem Teilbereich des Gebrauchsbereiches ausgebildet sind.

3. Kraftfahrzeugsitz nach Anspruch 1 oder 2, **dadurch gekennzeichnet, dass** die Ausgleichsmittel ausgebildet und vorgesehen sind, bei einem Verschwenken der Rückenlehne in dem Teilbereich des Gebrauchsbereiches eine derartige Einwirkung des Koppelmechanismus (1) auf die Feststellvorrichtung (120) zu verhindern, die zu einer Entriegelung der Feststellvorrichtung (120) führen würde.

4. Kraftfahrzeugsitz nach Anspruch 3, **dadurch gekennzeichnet, dass** die Ausgleichsmittel ausgebildet und vorgesehen sind, bei einem Verschwenken der Rückenlehne in dem Teilbereich des Gebrauchsbereiches eine Einwirkung des Koppelmechanismus (1) auf die Feststellvorrichtung (120) zu verhindern.

5. Kraftfahrzeugsitz nach einem der vorhergehenden Ansprüche, **dadurch gekennzeichnet, dass** die Ausgleichsmittel ausgebildet und vorgesehen sind, eine Einwirkung des Koppelmechanismus (1) auf die Feststellvorrichtung (120) erst zuzulassen, wenn sich die Rückenlehne (R) der vollständig vorgeklappten Position bis auf eine vorgebbare Winkeldifferenz genähert hat.

6. Kraftfahrzeugsitz nach einem der vorhergehenden Ansprüche, **dadurch gekennzeichnet, dass** die Ausgleichsmittel im oder am Koppelmechanismus (1) angeordnet sind.

7. Kraftfahrzeugsitz nach Anspruch 2 und 6, **dadurch gekennzeichnet, dass** die Ausgleichsmittel beim Verschwenken der Rückenlehne (R) im Teilbereich des Gebrauchsbereiches eine Einwirkung der Rückenlehne (R) auf den Koppelmechanismus (1) derart ausgleichen, dass ausgangsseitig des Koppelmechanismus (1) keine Einwirkung auf die Feststellvorrichtung (120) erfolgt.

8. Kraftfahrzeugsitz nach einem der vorhergehenden Ansprüche, **dadurch gekennzeichnet, dass** bei einem Vorklappen der Rückenlehne (R) außerhalb des Teilbereiches des Gebrauchsbereiches die eine Halterung (22) gemeinsam mit dem Taumelbeschlag (T) verschwenkt wird und die andere Halterung (21) an einer nicht gemeinsam mit der Rückenlehne (R) verschwenkbaren Baugruppe des Sitzgestells blockiert ist.

9. Kraftfahrzeugsitz mit
- einem Sitzgestell (G),
- einer schwenkbar gelagerten Rückenlehne (R) des Sitzgestelles (G), die einerseits durch Verschwenken in einem Gebrauchsbereich zwischen verschiedenen Gebrauchspositionen einstellbar ist und andererseits in einem entriegelten Zustand durch Verschwenken in Richtung auf die Sitzfläche (F) des Sitzgestelles (G) vorklappbar ist,
- einer Sitzlängsführung (101, 102) zur Einstellung der Sitzlängsposition,
- einer Feststellvorrichtung (120) zur Verriegelung einer zuvor eingestellten Sitzlängsposition,
- einem Koppelmechanismus (1), über den die Rückenlehne (R) mit der Feststellvorrichtung (120) derart gekoppelt ist, dass die Feststellvorrichtung (120) beim Vorklappen der Rückenlehne (R) entriegelbar ist, und
- einem Taumelbeschlag (T) der Rückenlehne (R), der beim Verschwenken der Rückenlehne (R) um eine Taumelachse (A) taumelt und mit dem die Eingangsseite des Koppelmechanismus (1) gekoppelt ist,
insbesondere nach einem der vorhereghenden Ansprüche,
**wobei**
Ausgleichsmittel vorgesehen sind, die bei einem Vorklappen der Rückenlehne (R) über die Position hinaus, in der die Entriegelung der Feststellvorrichtung (120) abgeschlossen ist, ein Zusammenwirken zweier Elemente (30, 35) des Koppelmechanismus (1) derart verhindern, dass eine zusätzliche Einwirkung auf die Feststellvorrichtung (120) vermieden wird.

10. Kraftfahrzeugsitz nach Anspruch 9, **dadurch gekennzeichnet, dass** die Ausgleichsmittel durch eine Ausbuchtung (37) in einem der Elemente (30, 35) gebildet werden.

11. Kraftfahrzeugsitz nach Anspruch 10, **dadurch gekennzeichnet, dass** das nachgeordnete der beiden Elemente (35) eine Ausbuchtung (37) aufweist, in der ein Abschnitt (32) des vorgeschalteten Elementes (30) bewegbar ist, ohne zusätzlich auf das nachgeordnete Element (35) einzuwirken.

12. Kraftfahrzeugsitz nach Anspruch 11, **dadurch gekennzeichnet, dass** die Kontur der Ausbuchtung (37) zumindest teilweise eine solche Krümmung, insbesondere einen solchen Radius aufweist, aufweist, dass darin ein Abschnitt (32) des vorgschalteten Elementes (30), insbesondere in Form eines Koppelhebels, bewegbar ist, ohne zusätzlich auf das nachgeordnete Element (35) einzuwirken.

13. Kraftfahrzeugsitz nach Anspruch 12, **dadurch gekennzeichnet, dass** das Ende (32) des Koppelhebels (30) in die Ausbuchtung (37) einfährt, wenn die Entriegelung der Feststellvorrichtung (120) abgeschlossen ist.

14. Kraftfahrzeugsitz nach einem der Ansprüche 1 bis 6, **dadurch gekennzeichnet, dass** Ausgleichsmittel in die Feststellvorrichtung (120) integriert sind.

## Claims

1. Motor vehicle seat with
- a seat frame (G)
- swivel mounted backrest (R) of the seat frame (G), which on one side can be adjusted by swivelling in a area of use between different useful positions and on the other side in a released state can be folded forwards by swivelling in the direction of the seat face (F) of the seat frame (G)
- a seat longitudinal guide (101, 102) for setting the seat longitudinal position;
- a fixing device (120) for locking a previously set seat longitudinal position;
- a coupling mechanism (1) through which the backrest (R) is coupled to the fixing device (120) so that the fixing device (120) can be released when folding the backrest (R) forwards; and
- a tumbler fitment (T) of the backrest (R) which during swivelling of the backrest (R) tumbles about a tumbler axis (A) and to which is coupled the input side of the coupling mechanism (1),
whereby
- the coupling mechanism (1) comprises traction means (15) which forms the core of a Bowden cable and which on swivelling the backrest (R) transfers forces to the output side of the coupling mechanism (1) so that the coupling mechanism can act on the fixing device (120), and which is fixed on a holder (22) which is mounted to pivot about an axis and
- compensating means are provided which when the backrest (R) is swivelled at least over a portion of the area of use prevent release of the fixing device, in which the holder (22) is not entrained by the tumbler fitment (T) when the backrest (R) is pivoted within the portion of the area of use, and wherein for fixing a Bowden sleeve (11) of the Bowden cable (10) on the fitment side on one hand and the core (15) of the Bowden cable (10) on the other side there are two holders (21, 22) which are rotatable relative to each other and which are mounted to swivel about an axis (A) and which when folding the backrest (R) forwards are turned relative to each other when the backrest (R) is located outside of the portion of the area of use.

2. Motor vehicle seat according to claim 1, **characterised in that** the compensating means are formed for compensating the action of the backrest (R) on the coupling mechanism (1) when swivelling the backrest (R) in the portion of the area of use.

3. Motor vehicle seat according to claim 1 or 2, **characterised in that** the compensating means are formed and provided to prevent during swivel movement of the backrest in the portion of the area of use such action of the coupling mechanism (1) on the fixing device (120) which would lead to release of the fixing device (120).

4. Motor vehicle seat according to claim 3, **characterised in that** the compensating means are formed and provided to prevent during swivel movement of the backrest in the portion of the area of use action of the coupling mechanism (1) on the fixing device (120).

5. Motor vehicle seat according to one of the preceding claims, **characterised in that** the compensating means are formed and provided to only permit action of the coupling mechanism (1) on the fixing device (120) when the backrest (R) has approached the fully folded forwards position except for a predeterminable angular difference.

6. Motor vehicle seat according to one of the preceding claims, **characterised in that** the compensating means are arranged in or on the coupling mechanism (1).

7. Motor vehicle seat according to claim 2 and 6, **characterised in that** the compensating means during swivel movement of the backrest (R) in the portion of the area of use compensate action of the backrest (R) on the coupling mechanism (1) so that on the output side of the coupling mechanism (1) no action takes place on the fixing device (120).

8. Motor vehicle seat according to one of the preceding claims, **characterised in that** when folding the backrest (R) forwards outside of the portion of the area of use, the one holder (22) is swivelled together with the tumbler fitment (T) and the other holder (21) is blocked on a structural assembly of the seat frame which cannot swivel together with the backrest (R).

9. Motor vehicle seat with a seat frame (G)
- a swivel mounted backrest (R) of the seat frame (G) which on the one side is adjustable by swivelling in an area of use between different useful positions and on the other side can be folded forwards in a released state by swivelling towards to the seat face (F) of the seat frame (G)
- a seat longitudinal guide (101, 102) for setting the seat longitudinal position;
- a fixing device (120) for locking a previously set seat longitudinal position
- a coupling mechanism (1) through which the backrest (R) is coupled to the fixing device (120) so that the fixing device (120) can be released when folding the backrest (R) forwards; and
- a tumbler fitment (T) of the backrest (R) which when swivelling the backrest (R) tumbles about a tumbler axis (A) and to which the input side of the coupling mechanism (1) is coupled,
- more particularly according to one of the preceding claims,
**whereby**
compensating means are provided which when folding the backrest (R) forwards beyond the position in which the release of the fixing device (120) is terminated, prevent interaction of two elements (30, 35) of the coupling mechanism (1) so that an additional action on the fixing device (120) is prevented.

10. Motor vehicle seat according to claim 9, **characterised in that** the compensating means are formed by a bulge (37) in one of the elements (30, 35).

11. Motor vehicle seat according to claim 10, **characterised in that** the element (35) on the output side has a bulge (37) in which a section (32) of the element (30) on the input side can move without additionally acting on the element (35) on the output side.

12. Motor vehicle seat according to claim 11, **characterised in that** the contour of the bulge (37) has at least in part such a curvature, more particularly such a radius that a section (32) of the element (30) on the input side, more particularly in the form of a coupling lever, can move therein without additionally acting on the element (35) on the output side.

13. Motor vehicle seat according to claim 12 **characterised in that** the end (32) of the coupling lever (30) moves into the bulge (37) when the release of the fixing device (120) is terminated.

14. Motor vehicle seat according to one of claims 1 to 6, **characterised in that** the compensating means are integrated in the fixing device (120).

## Revendications

1. Siège de véhicule automobile, comprenant :
- un bâti de siège (G),
- un dossier (R) du bâti de siège (G), monté en pivotement et susceptible d'une part d'être réglé par pivotement dans une plage d'utilisation entre diverses positions d'utilisation, et d'autre part d'être rabattu dans une situation déverrouillée par pivotement en direction de la surface d'assise (F) du bâti de siège (G),
- un guidage longitudinal de siège (101, 102) pour régler la position longitudinale du siège,
- un dispositif d'immobilisation (120) pour verrouiller une position longitudinale préalablement établie du siège,
- un mécanisme de couplage (1), via lequel le dossier (R) est couplé au dispositif d'immobilisation (120) de telle façon que le dispositif d'immobilisation (120) est déverrouillable lors du rabattement du dossier (R), et
- une ferrure oscillante (T) du dossier (R) qui oscille lors du pivotement du dossier (R) autour d'un axe d'oscillation (A) et à laquelle est couplé le côté entrée du mécanisme de couplage (1),
dans lequel :
- le mécanisme de couplage (1) comprend un moyen de traction (15) qui forme l'âme d'un câble Bowden (10) et qui, lors d'un pivotement du dossier (R), transmet des forces vers le côté sortie du mécanisme de couplage (1) de telle façon que le mécanisme de couplage (1) peut agir sur le dispositif d'immobilisation (120), et qui est fixé sur une monture (22) montée en pivotement autour d'un axe, et
- il est prévu des moyens de compensation qui, lors d'un pivotement du dossier (R), empêchent un déverrouillage du dispositif d'immobilisation, au moins sur une zone partielle de la plage d'utilisation, par le fait que la monture (22) n'est pas entraînée par la ferrure oscillante (T) lors d'un pivotement du dossier (R) à l'intérieur de la zone partielle de la plage d'utilisation, et dans lequel, pour la fixation côté ferrure d'une gaine (11) du câble Bowden (10) d'une part et de l'âme (15) du câble Bowden (10) d'autre part, il est prévu deux montures (21, 22) capables de tourner l'une par rapport à l'autre et montées en pivotement autour d'un axe (A), qui tournent l'une par rapport à l'autre lors d'un rabattement du dossier (R), si le dossier (R) se trouve à l'extérieur de la zone partielle de la plage d'utilisation.

2. Siège de véhicule automobile selon la revendication 1, **caractérisé en ce que** les moyens de compensation sont réalisés en vue d'une compensation de l'action du dossier (R) sur le mécanisme de couplage (1) lors du pivotement du dossier (R) dans la zone partielle de la plage d'utilisation.

3. Siège de véhicule automobile selon l'une ou l'autre des revendications 1 et 2, **caractérisé en ce que** les moyens de compensation sont réalisés et prévus de manière à empêcher, lors d'un pivotement du dossier dans la zone partielle de la plage d'utilisation, une action telle du mécanisme de couplage (1) sur le dispositif d'immobilisation (120) qu'elle mènerait à un déverrouillage du dispositif d'immobilisation (120).

4. Siège de véhicule automobile selon la revendication 3, **caractérisé en ce que** les moyens de compensation sont réalisés et prévus de manière à empêcher, lors d'un pivotement du dossier dans la zone partielle de la plage d'utilisation, une action du mécanisme de couplage (1) sur le dispositif d'immobilisation (120).

5. Siège de véhicule automobile selon l'une des revendications précédentes, **caractérisé en ce que** les moyens de compensation sont réalisés et prévus de manière à permettre une action du mécanisme de couplage (1) sur le dispositif d'immobilisation (120) uniquement quand le dossier (R) s'est rapproché de la position totalement rabattue, à une différence angulaire prédéterminée près.

6. Siège de véhicule automobile selon l'une des revendications précédentes, **caractérisé en ce que** les moyens de compensation sont agencés dans le mécanisme de couplage (1) ou sur celui-ci.

7. Siège de véhicule automobile selon les revendications 2 et 6, **caractérisé en ce que** les moyens de compensation compensent, lors du pivotement du dossier (R) dans la zone partielle de la plage d'utilisation, une action du dossier (R) sur le mécanisme de couplage (1) de telle façon qu'il ne se produit du côté sortie du mécanisme de couplage (1) aucune action sur le dispositif d'immobilisation (120).

8. Siège de véhicule automobile selon l'une des revendications précédentes, **caractérisé en ce que**, lors d'un rabattement du dossier (R) hors de la zone partielle de la plage d'utilisation, l'une des montures (22) est pivotée conjointement avec la ferrure oscillante (T), et l'autre monture (21) est bloquée contre un groupe structurel du bâti de siège qui ne pivote pas conjointement avec le dossier (R).

9. Siège de véhicule automobile, comprenant :
- un bâti de siège (G),
- un dossier (R) du bâti de siège (G), monté en pivotement et susceptible d'une part d'être réglé par pivotement dans une plage d'utilisation entre diverses positions d'utilisation, et d'autre part d'être rabattu dans une situation déverrouillée par pivotement en direction de la surface d'assise (F) du bâti de siège (G),
- un guidage longitudinal de siège (101, 102) pour régler la position longitudinale du siège,
- un dispositif d'immobilisation (120) pour verrouiller une position longitudinale préalablement établie du siège,
- un mécanisme de couplage (1), via lequel le dossier (R) est couplé au dispositif d'immobilisation (120) de telle façon que le dispositif d'immobilisation (120) est déverrouillable lors du rabattement du dossier (R), et
- une ferrure oscillante (T) du dossier (R) qui oscille lors du pivotement du dossier (R) autour d'un axe d'oscillation (A) et à laquelle est couplé le côté entrée du mécanisme de couplage (1), en particulier selon l'une des revendications précédentes,
dans lequel sont prévus des moyens de compensation qui, lors d'un rabattement du dossier (R) au-delà de la position dans laquelle le déverrouillage du dispositif d'immobilisation (120) est terminé, empêchent une coopération de deux éléments (30, 35) du mécanisme de couplage (1) de telle façon qu'une action additionnelle sur le dispositif d'immobilisation (120) est évitée.

10. Siège de véhicule automobile selon la revendication 9, **caractérisé en ce que** les moyens de compensation sont formés par un creux (37) dans l'un des éléments (30, 35).

11. Siège de véhicule automobile selon la revendication 10, **caractérisé en ce que** celui des deux éléments (35) qui se trouve en aval présente un creux (37) dans lequel un tronçon (32) de l'élément (30) qui se trouve en amont est déplaçable sans agir additionnellement sur l'élément (35) qui se trouve en aval.

12. Siège de véhicule automobile selon la revendication 11, **caractérisé en ce que** le contour du creux (37) présente au moins partiellement une courbure telle, et en particulier un rayon tel, qu'un tronçon (32) de l'élément (30) qui se trouve en amont, en particulier sous la forme d'un levier de couplage, est déplaçable à l'intérieur de celui-ci sans agir additionnellement sur l'élément (35) qui se trouve en aval.

13. Siège de véhicule automobile selon la revendication 12, **caractérisé en ce que** l'extrémité (32) du levier de couplage (30) pénètre dans le creux (37) quand le déverrouillage du dispositif d'immobilisation (120) est terminé.

14. Siège de véhicule automobile selon l'une des revendications 1 à 6, **caractérisé en ce que** les moyens de compensation sont intégrés dans le dispositif d'immobilisation (120).
